| | Europäisches Patentamt | |
|---|---|---|
| (19) | European Patent Office | |
| | Office européen des brevets | (11) Veröffentlichungsnummer : **0 412 978 B1** |

(12) # EUROPÄISCHE PATENTSCHRIFT

(45) Veröffentlichungstag der Patentschrift :
**11.11.92 Patentblatt 92/46**

(51) Int. Cl.$^5$ : **B05C 5/02**, B05C 11/10

(21) Anmeldenummer : **89904794.8**

(22) Anmeldetag : **20.04.89**

(86) Internationale Anmeldenummer :
**PCT/EP89/00423**

(87) Internationale Veröffentlichungsnummer :
**WO 89/10206 02.11.89 Gazette 89/26**

(54) **VORRICHTUNG ZUM ABGEBEN HOCHVISKOSER, PASTÖSER, KOMPRESSIBLER SUBSTANZEN.**

(30) Priorität : **20.04.88 DE 3813161
07.05.88 DE 3815618**

(43) Veröffentlichungstag der Anmeldung :
**20.02.91 Patentblatt 91/08**

(45) Bekanntmachung des Hinweises auf die
Patenterteilung :
**11.11.92 Patentblatt 92/46**

(84) Benannte Vertragsstaaten :
**AT BE DE FR GB NL SE**

(56) Entgegenhaltungen :
**EP-A- 0 171 309
EP-A- 0 202 413**

(56) Entgegenhaltungen :
**DE-A- 2 757 331
DE-A- 3 542 767
DE-A- 3 630 910
GB-A- 2 192 567**

(73) Patentinhaber : **Lenhardt Maschinenbau
GmbH
Industriestrasse 2-4
W-7531 Neuhausen-Hamberg (DE)**

(72) Erfinder : **LENHARDT, Karl
Industriestrasse 2-4
W-7531 Neuhausen-Hamberg (DE)**

(74) Vertreter : **Twelmeier, Ulrich, Dipl.Phys. et al
Westliche Karl-Friedrich-Strasse 29-31
W-7530 Pforzheim (DE)**

Jouve, 18, rue Saint-Denis, 75001 PARIS

**Beschreibung**

Die Erfindung geht aus von einer Vorrichtung zum Abgeben hochviskoser, pastöser, kompressibler Substanzen, insbesondere zum Auftragen von Dicht- und Klebstoffen auf Karosserieteile im Automobilbau, mit einem Vorratsbehälter zum Aufnehmen der Substanz, mit einer Düse für den Austritt der Substanz, mit einer von dem Vorratsbehälter zur Düse führenden Speiseleitung und mit einer Pumpe zum Einspeisen der Substanz in die Speiseleitung.

Zu den Substanzen, mit deren dosiertem Abgeben und Auftragen sich dieses Patent befaßt, gehören z.B. heiß zu verarbeitende Einkomponenten-Dicht- und -Klebstoffe auf Butyl-Kautschuk-Basis, beispielsweise Polyisobutylene, die durch Erwärmung auf eine Temperatur zwischen 80°C und 140°C (je nach Materialtyp) soweit erweichen, dass sie pumpbar werden, heiß zu verarbeitende Zweikomponenten-Dicht- und -Klebstoffe wie z.B. Thiokole (Polysulfide), sowie kalt zu verarbeitende Dicht- und Klebstoffe, darunter auch solche, die vernetzt werden können, beispielsweise Substanzen auf Polyvinylchloridbasis, auf Polyurethanbasis und Acrylplastisole.

Im Karosseriebau ist man bestrebt, solche Dicht- und Klebstoffe einzusetzen, um Karosserieteile abzudichten und/oder miteinander zu verkleben, beispielsweise zum Verkleben oder Abdichten von Bördelfalzen, zur Abdichtung von Dachrahmen, zur Dachspiegel-Unterfütterung oder zum Aufkleben von Zierleisten. Dabei kommt es darauf an, die Dicht- und Klebstoffe in genau bestimmten Mengen punktweise oder raupenförmig oder in Form von endlosen Strängen aufzutragen. Eine hohe Dosiergenauigkeit wird verlangt, weil ein zu geringer Auftrag zu einer mangelhaften Abdichtung oder Verklebung führen kann, während ein zu starker Auftrag dazu führen kann, dass überschüssiger Dicht- bzw. Klebstoff wieder entfernt werden muss, weil er beispielsweise bei einer Bördelfalz-Verklebung oder Abdichtung zu stark hervorquillt. Ausserdem wird verlangt, dass die Vorrichtung zum Auftragen dieser Substanzen durch einen Roboter gehandhabt und geführt werden kann, damit das Austragen automatisiert erfolgen kann.

Es ist bekannt, solche Substanzen aus einem Faß, in welchem sie angeliefert werden, mit einer Faßpumpe, welche beispielsweise in der EP 0 171 309 Al beschrieben ist, herauszupumpen und über einen unter konstantem Vordruck stehenden Zwischenspeicher einer verschließbaren Auftragsdüse zuzuführen, welche durch einen Roboter geführt werden kann. Dabei befindet sich zwischen dem Zwischenspeicher und der Düse eine längere Förderleitung, beispielsweise eine beheizte Rohrleitung mit Gelenken oder ein Druckschlauch. Nachteilig dabei ist, dass man beim Fördern hochviskoser, pastöser Substanzen durch längere Förderleitungen einen hohen Druckverlust in Kauf nehmen muss: Förderdrücke zwischen 200 bar und 400 bar sind dabei keine Seltenheit. Der Förderdruck baut sich auf dem Weg vom Zwischenspeicher bis zur Auftragsdüse praktisch bis auf Null ab, wenn die Düse geöffnet ist. Wird die Düse geschlossen, findet in der Förderleitung ein Druckausgleich statt, d.h., dass vor der geschlossenen Düse der Druck ansteigt. Die Folge davon ist, dass beim Öffnen der Düse eine unkontrollierte Menge der hochviskosen Substanz austritt, bis sich der bei geschlossener Düse an der Düse aufgebaute Druck wieder abgebaut hat. Es besteht zwar die Möglichkeit, den Druck in der Förderleitung bei geschlossener Düse beispielsweise durch Öffnen einer By-pass-Leitung abzubauen, doch erkauft man sich das mit einem nicht weniger gravierenden Nachteil, denn dann bewirkt die hohe Viskosität der Substanz, dass nach dem erneuten Öffnen der Düse aus dieser die Substanz zunächst nicht in der gewünschten Fördermenge austritt, sondern mit einer geringeren, allmählich ansteigenden Menge. Verschlimmert wird die unzureichende Dosiergenauigkeit durch den Einfluß der Kompressibilität der hochviskosen Substanzen, denn jede Änderung der Druckverhältnisse in der Förderleitung verändert den Massentransport durch die Förderleitung, wobei diese nachteilige Wirkung mit steigender Länge der Förderleitung zunimmt, weil damit auch das Volumen, auf welches sich schwankende Drücke auswirken, zunimmt. Besonders stark ändern sich die Druckverhältnisse nach dem Abschalten der Pumpe und nach dem Einschalten der Pumpe; vor allem nach dem Einschalten der Pumpe treten erhebliche Dosierungenauigkeiten auf.

Um von einer längeren Förderleitung unabhängig zu sein, ist es bereits bekannt, für das Auftragen solcher hochviskosen Substanzen einen Auspreßzylinder zu verwenden, in welchem eine gewisse Menge der Substanz gespeichert ist. Aus diesem Auspreßzylinder wird die Substanz durch einen hydraulisch betätigten Kolben ausgepreßt. Ist der Zylinder leer, muss der Auftragsvorgang unterbrochen werden, damit der Zylinder nachgefüllt bzw. durch einen nachgefüllten Zylinder ersetzt werden kann. Solche Unterbrechungszeiten sind häufig unerwünscht. Um sie gering zu halten, verwendet man Auspreßzylinder mit möglichst großem Fassungsvermögen. Je größer jedoch die Menge der im Auspreßzylinder gespeicherten hochviskosen Substanz ist, desto größer wird der nachteilige Einfluß der Kompressibilität auf die Dosiergenauigkeit. Mit zunehmender Menge der hochviskosen Substanz nimmt nämlich der Druck zu, der benötigt wird, um die Substanz aus dem Zylinder auszupressen, und mit zunehmendem Druck wird die Substanz zunehmend komprimiert. Als weiterer Nachteil kommt hinzu, dass der zum gleichmässigen Auspressen benötigte Druck mit fortschreitender Entleerung des Zylinders abnimmt, wobei das Ausmaß der erforderlichen Druckanpassung mit zunehmendem Fassungsvermögen des Zylinders ansteigt. Ein weiterer Nachteil besteht darin, dass Auspreßzylinder, die ein großes Fassungsvermögen haben, damit sie nicht in kurzen Zeitabständen unter Unterbrechung des Dosiervorgangs nachgefüllt oder ausgetauscht werden müssen, so schwer sind, dass sie unter den gegebenen Verhältnissen im Karosseriebau durch einen Roboter nicht mehr gehandhabt werden können.

Aus der DE-A-35 42 767 sind bereits Vorrichtungen zum Fördern von Dicht- und Klebstoffen zum Versiegeln von Isolierglas bekannt, welche als Zwischenspeicher einen laufend nachfüllbaren Zylinder haben, aus welchem der Dicht- oder Klebstoff ohne Unterbrechung durch einen Nachfüllvorgang durch einen Kolben ausgepreßt werden kann, auf den eine gleichbleibende Kraft ausgeübt wird. Auf diese Weise wird die Dosiergenauigkeit in erster Linie vom Volumen des Zwischenspeichers, von der auf seinem Kolben lastenden Kraft und von den Verhältnissen im Leitungsweg vom Zwischenspeicher zur Düse beeinflußt. Im Leitungsweg zwischen dem Zwischenspeicher und der Düse sind bei der bekannten Vorrichtung u.a. ein Mischer vorgesehen. Nach wie vor hat aber die Kompressibilität der zu fördernden Substanz einen nicht zu vernachlässigenden Einfluß auf die Dosiergenauigkeit, weshalb im Leitungsweg zur Düse noch eine Dosierpumpe vorgesehen ist. Nachteilig ist ferner, dass Änderungen der Dosiermenge bei ununterbrochenem Dosiervorgang weder schnell genug noch genau genung möglich sind.

Der Erfindung liegt die Aufgabe zugrunde, eine Vorrichtung der eingangs genannten Art zu schaffen, die den oben geschilderten Anforderungen im Karosseriebau gerecht wird, ein Dosieren hochviskoser, pastöser, kompressibler Substanzen mit hoher Genauigkeit ermöglicht und ohne weiteres eine Handhabung und Führung der Auftragsdüse durch einen Roboter erlaubt.

Diese Aufgabe wird gelöst durch eine Vorrichtung mit den im Patentanspruch 1 angegebenen Merkmalen. Vorteilhafte Weiterbildungen der Erfindung sind Gegenstand der Unteransprüche.

Der Erfinder hat erkannt, dass es für ein genaues und reaktionsschnelles Dosieren nicht genügt, die Substanz in einer größeren Entfernung von der Düse durch einen Kolben unter Druck zu setzen, der mit einer vorgegebenen gleichbleibenden Kraft belastet wird. Erfindungsgemäß ist vielmehr vorgesehen, zusätzlich zur Pumpe **nahe bei der Mündung der Düse** einen Pufferbehälter anzuordnen, dessen Fassungsvermögen durch einen **unmittelbar am oder im Pufferbehälter angeordneten** Druckerzeuger veränderbar ist. Dieser Pufferbehälter erlaubt es, Schwankungen der Fördermenge auf dem Weg vom Vorratsbehälter biw zum Pufferbehälter auszugleichen. Ausserdem kann der Pufferbehälter entsprechend seinem Fassungsvermögen eine gewisse Menge der Substanz zwischenspeichern, so dass auch bei zeitweilig nachlassender oder bei unterbrochener Förderleistung der Pumpe der Dosiervorgang ohne Unterbrechung weiterlaufen kann. Damit der Pufferbehälter nach einem Stillstand oder einer verminderten Förderleistung der Pumpe wieder aufgefüllt werden kann, ist es lediglich erforderlich, dass der Druck, mit welchem die Pumpe, bei der es sich um eine Faßpumpe handeln kann, wie sie in der französischen Patentanmeldung Nr. 84/14 182 beschrieben ist, die Substanz in den Pufferbehälter einspeist, größer ist als der Druck, der vom Druckerzeuger auf die im Pufferbehälter befindliche Substanz ausgeübt wird. Da der Druckerzeuger auch während des Nachfüllvorgangs Druck auf die Substanz im Pufferbehälter ausübt, wird gewährleistet, dass die Substanz auch während des Nachfüllvorganges mit gleichbleibender Dosiergenauigkeit durch die Düse hindurch ausgepreßt werden kann, weil dafür der vom Druckerzeuger ausgeübte Druck bestimmend ist, solange durch das Nachfüllen der Pufferbehälter nicht bis zu seinem maximalen Fassungsvermögen gefüllt ist, denn dann würde der Druck im Pufferbehälter unerwünscht ansteigen. Um das zu vermeiden, sieht man zweckmässigerweise Schaltmittel, z.B. einen oder zwei Lagesensoren, vor, die ansprechen, bevor der Pufferbehälter ganz voll ist und dann die Pumpe abschalten, und die auch ansprechen, bevor der Pufferbehälter ganz leer ist und dann die Pumpe einschalten. Um seine Aufgabe zu erfüllen, kann der Pufferbehälter recht klein sein: Es genügt ein Fassungsvermögen in der Größenordnung von 100 ml. Vorzugsweise beträgt das Fassungsvermögen nicht mehr als 100 ml. Dementsprechend kann auch das Volumen, um welches sich das Fassungsvermögen des Pufferbehälters durch die Pufferung ändern kann, sehr klein sein: 100 ml sind für den angestrebten Zweck ausreichend, vorzugsweise ändert sich das Fassungsvermögen durch die Pufferung um nicht mehr als 70 ml.

Bei so kleinen Volumina hat die Kompressibilität der hochviskosen Substanz kaum noch einen Einfluss auf die Dosiergenauigkeit, ihr Einfluß auf die Dosiergenauigkeit nimmt ab, je kleiner die Volumina sind. Gleichzeitig wird die aus der Düse, dem Pufferbehälter und dem Druckerzeuger gebildete Baueinheit so leicht, dass sie mühelos von einem Roboter gehandhabt und geführt werden kann, und dennoch ist ein unterbrechungsfreies Dosieren möglich.

Das Vorsehen eines solchen Pufferbehälters ist jedoch nicht allein verantwortlich für den Erfolg der Erfindung, vielmehr wird er kombiniert mit einem Drucksensor, welcher den in der Speiseleitung herrschenden Druck an einer stromabwärts vom Druckerzeuger gelegenen Stelle aufnimmt und als IST-Wert in einen Regelkreis gibt, der diesen Druck durch Steuerung des Druckerzeugers auf einen vorgegebenen Sollwert regelt. Bei gattungsgemäßen Vorrichtungen ist eine solche, nicht die von einer Kolben-Zylinder-Einheit ausgeübte Kraft, sondern unmittelbar den Druck in der zu dosierenden Substanz bestimmende Regelung neu, insbesondere eine Regelung des Drucks in der Substanz an einer **im Nahbereich der Düse gelegenen** Stelle. Regelt man nämlich den Druck in der Substanz im Nahbereich der Düse, dann hat der Leitungsweg von dort bis zur Düsenmündung keinen wesentlichen Einfluß mehr auf die Dosiergenauigkeit; der Einfluß auf die Dosiergenauigkeit ist um so geringer, je kürzer der Leitungsweg vom Regelort bis zur Mündung der Düse ist und je geringer das Volumen der Substanz auf diesem Weg ist. Praktisch kann man davon ausgehen, dass bei so kurzen Wegen zwischen Regelort und Düsenmündung die Dosiergenauigkeit genausogut ist wie die Genauigkeit, mit der am Regelort der Druck in der Substanz geregelt wird. Als weiterer Vorteil kommt hinzu, dass die erfindungsgmäße Vorrichtung sehr reaktionsschnell ist, weil der Druckerzeuger, der Drucksensor und die Düsenmündung nahe beieinander liegen; die Dosiermenge kann in Reaktionszeiten, die im Millisekundenbereich liegen, geändert werden, ohne dass Regelschwingungen auftreten, und der Regler kann mit einer entsprechend steilen Regelkennlinie betrieben werden.

Mit besonderem Vorteil ist es deshalb erfindungsgemäß möglich, die in der Zeiteinheit abgegebene Menge ausschließlich druckabhängig zu steuern, nämlich dadurch, dass man bei unveränderlichem lichten Querschnitt der Düse und der Speiseleitung zwischen dem Pufferbehälter und der Düse am Regler veränderliche Sollwerte des Drucks vorgibt. Damit eignet sich die erfindungsgemäße Vorrichtung besonders für den Einsatz in automatisierten Fertigungen.

Mit der erfindungsgemäßen Vorrichtung werden die besten Ergebnisse erzielt, wenn folgende Regeln beachtet werden: Der Drucksensor sollte so nahe wie möglich bei der Mündung der Düse liegen; die vom Pufferbehälter zur Mündung der Düse führende Leitung sollte so kurz wie möglich sein; zugleich sollte der Pufferbehälter möglichst nahe beim Drucksensor liegen; die Volumina im Pufferbehälter und im Leitungsweg vom Pufferbehälter zur Mündung der Düse sollten möglichst klein sein.

Wie kurz die Wege und wie klein die Volumina gewählt werden können, hängt von den durch den jeweiligen Anwendungsfalls vorgegebenen technischen Randbedingungen ab. So wird die Düse im allgemeinen eine bestimmte Mindestlänge aufweisen müssen, um sie halten, führen, möglicherweise drehbar lagern oder bis zu einer bestimmten Tiefe in ein Werkstück eintauchen lassen zu können. Welche Länge der Leitungsweg vom Pufferbehälter zur Mündung der Düse haben kann, ohne dass er die Dosiergenauigkeit nennenswert beeinträchtigt, hängt auch von der Viskosität der zu verarbeitenden Substanzen ab. Je höher die Viskosität ist, desto stärker wirkt sich die Länge des Leitungsweges auf die Dosiergenauigkeit aus. Für das Verarbeiten hochviskoser, pastöser Dicht- und Klebstoffe, wie sie eingangs genannt sind, sollte die vom Pufferbehälter zur Mündung der Düse führende Leitung kürzer als 20 cm, vorzugsweise kürzer als 15 cm sein.

Besonders kompakt und deshalb für die Ausbildung kurzer Leitungswege und für die Handhabbarkeit durch einen Roboter günstig ist ein Aufbau der Vorrichtung, bei dem die Düse und der Pufferbehälter auf einer gemeinsamen Halterung angeordnet sind und die Leitung vom Pufferbehälter zur Düse auf dem kürzesten Weg in der Halterung verläuft, insbesondere wenn der Pufferbehälter in der Halterung für die Düse oder sogar in der Düse selbst angeordnet ist oder wenn die Düse unmittelbar an den Pufferbehälter anschließt, so dass eine besondere Verbindungsleitung zwischen beiden entfällt.

Weil erfindungsgemäß der Druck in der Substanz nahe bei der Düse geregelt wird, eignen sich für die Verwendung in der erfindungsgemäßen Vorrichtung besonders auch Düsen, die durch ein Ventil verschließbar sind, denn es kommt dann weder zu einem Nachlaufen der Substanz nach einem Abschalten der Vorrichtung noch kommt es zu einer überschießenden Dosierung unmittelbar nach dem Einschalten der Vorrichtung. Besonders geeignet sind Sitzventile, insbesondere Nadelventile, welche nur eine geschlossene Stellung und eine geöffnete Stellung mit gleichbleibendem Öffnungsquerschnitt einnehmen. Der Sitz für die Nadel kann unmittelbar an der Düsenöffnung vorgesehen sein, so dass praktisch nichts von der Substanz nachlaufen kann, wenn die Düse geschlossen wird. Soll mit der Nadel zugleich der Durchsatz der Substanz durch die Düse beeinflußt werden, sieht man am besten ein den Hub der Nadel veränderndes Verstellorgan, insbesondere einen verstellbaren Anschlag vor. Wie schon weiter vorne erläutert, kann in diesem Fall erfindungsgemäß die Dosiermenge pro Zeiteinheit durch Ändern des Drucks im Pufferbehälter reaktionsschnell geändert werden, indem am Regler eine entsprechende Änderung der Sollwertvorgabe erfolgt, vorteilhafterweise durch eine numerische Steuerung. Die erfindungsgemäße Vorrichtung eignet sich deshalb gut für den Einsatz in einer automatisierten Fertigungsstraße im Automobilbau.

Es ist auch möglich, aber weniger vorteilhaft, als Ventil ein Stellventil, z.B. ein Drehschieberventil, ein Stößel- oder Kegelventil zu verwenden. Mit einem solchen Stellventil ist eine veränderliche Mengendosierung möglich, indem der Druck, den der Drucksensor aufnimmt, auf einen konstanten Wert geregelt wird und bei gleichbleibendem Druck die Dosiermenge durch Verändern des Öffnungsquerschnittes des Stellventiles verändert wird.

Im Karosseriebau besteht aber nicht nur die Forderung, unterschiedliche Mengen von Dicht- und Klebstoffen pro Zeiteinheit auf Karosserieteile aufzutragen oder in Karosserieteile einzuspritzen bzw. unterschiedlich dicke Raupen oder Stränge dieser Substanzen aufzutragen. Hinzu kommt, dass häufig nicht nur geradlinige, sondern gekrümmte, insbesondere zu einem Ring geschlossene Stränge von Dicht- und Klebstoffen aufzutragen sind. Wenn das mit Strängen geschehen soll, die eine von der Kreisform verschiedene Querschnittsgestalt haben (z.B. Rechteckprofilstränge), dann muss die Düse entlang ihres Weges gedreht werden können. Grundsätzlich ist es möglich, die gesamte, den Pufferbehälter mit der darin gespeicherten Substanz und die Düse umfassende Vorrichtung als Ganzes zu drehen. Im Hinblick darauf, dass der Pufferbehälter aber mit seinem Druckerzeuger und mit einer Speiseleitung zum Nachfüllen verbunden ist, ist es wesentlich günstiger, die Düse und den Pufferbehälter auf einer gemeinsamen Halterung anzuordnen und die Düse relativ zum Pufferbehälter um ihre Längsachse drehbar zu lagern. In diesem Fall kann der Roboter, der die Düse führen soll, unmittelbar an der Düse oder an einem drehfest mit der Düse verbundenen Montageteil angreifen und die Düse nach Bedarf drehen, während die Halterung, an welcher der Pufferbehälter angeordnet ist, diese Drehbewegung nicht mitmachen muss.

Die Leitung vom Pufferbehälter zur drehbaren Düse könnte im Prinzip eine Schlauchleitung sein, die entweder mit dem Pufferbehälter oder mit der Düse oder mit beiden durch eine drehbare Kupplung verbunden ist. Besser ist es jedoch, die Leitung so anzuordnen, dass sie in der Halterung verläuft und die Halterung selbst als drehbare Kupplung auszubilden, die die Düse umgibt. Dadurch kann die Leitung sehr kurz gehalten werden, was für die praktische Umsetzung der Erfindung wichtig ist, da längere Verbindungsleitungen zwischen dem Pufferbehälter und der Düse unerwünscht sind. Andererseits wird durch die Anordnung der Verbindungsleitung in der Halterung eine besonders günstige Möglichkeit geschaffen, durch Beheizung der Halterung diese Leitung und gleichzeitig die Düse zu beheizen. Eine solche Beheizung ist von Bedeutung, wenn die Vorrichtung mit heiß zu verarbeitenden Substanzen arbeiten soll, denn deren Temperatur beeinflußt über die Viskosität die Dosiergenauigkeit und kann durch eine solche Beheizung stabilisiert werden. Deshalb sind in der erfindungsgemäßen Vorrichtung vorzugsweise auch ein oder mehrere Heizelemente zum Beheizen des Pufferbehälters und/oder der Düse sowie wenigstens ein Temperatursensor vorgesehen, welcher zusammen mit den Heizelementen in einem Regelkreis liegt, dessen Regler die Temperatur auf einen vorgebbaren Sollwert stabilisiert. Der Temperatursensor sollte zweckmässigerweise in der Halterung an einer nicht weit von der Düse entfernten Stelle angeordnet sein, damit er die Temperatur möglichst dicht an der Düse erfaßt; zweckmässigerweise liegt er auch nahe beim Drucksensor. Wenn die Düse nicht unmittelbar an den Pufferbehälter anschließt, erreicht man eine besonders gute Temperaturkonstanz dann, wenn man die Halterung mit der Düse einerseits und den Pufferbehälter andererseits durch getrennte Heizkreise mit je wenigstens einem Heizelement und je einem Temperatursensor regelt.

Ein Temperatursensor in der Vorrichtung ist nicht nur für heiß zu verarbeitende Substanzen, sondern auch für kalt zu verarbeitende Substanzen von Vorteil, denn sie können sich auf ihrem Weg zur Düse erwärmen, wodurch ihre Viskosität abnimmt und die Dosiergenauigkeit beeinflußt werden kann. Dem begegnet man mit Vorteil durch einen Temperatursensor, der zusammen mit dem Drucksensor Bestandteil eines Regelkreises ist, dessen Regler den Druck in Abhängigkeit von der gemessenen Temperatur nach gespeicherten Erfahrungswerten nachregelt.

Läßt man die Leitung von dem Pufferbehälter zur drehbaren Düse - wie es bevorzugt ist - in der Halterung verlaufen, dann ist es am besten, in der Halterung einen Ringkanal vorzusehen, welcher die Düse oder eine die Düse tragende Welle umgibt. In diesen Ringkanal soll einerseits die vom Pufferbehälter kommende Leitung einmünden; andererseits soll der Ringkanal durch einen in der Düse bzw. in ihrer Welle verlaufenden Kanal mit der Mündung der Düse Verbindung haben. Ein solcher Ringkanal erlaubt ohne weiteres eine Drehung der Düse um 360° oder mehr.

Der Ringkanal eignet sich auch besonders, um in seiner Nachbarschaft den Drucksensor anzuordnen. Er kann in der Halterung so angeordnet sein, dass er unmittelbar an den Ringkanal angrenzt und den Druck im Ringkanal erfaßt, also an einer Stelle, die ausserordentlich nah bei der Mündung der Düse liegt. Auf dem Weg zum Ringkanal bis zur Düsenmündung findet zwar ein Druckabfall statt, es sind jedoch keine unvorhergesehenen Druckschwankungen mehr zu erwarten, so dass ein im Ringkanal konstant geregelter Druck zu einem entsprechend konstanten Austragen der Substanz aus der Düsenmündung führt, weshalb die Anordnung des Drucksensors am Ringkanal sehr vorteilhaft ist. Bei kurzem Weg vom Pufferbehälter zur Mündung der Düse kann der Drucksensor aber auch im Pufferbehälter selbst angeordnet werden.

Für die Zwecke der vorliegenden Erfindung eignet sich als Pufferbehälter ein Behälter mit einem darin verschieblich geführten Kolben, der von dem Druckerzeuger beaufschlagt wird. Um den Pufferbehälter nachfüllen zu können, mündet an einer vor dem Kolben in seiner vordersten Stellung gelegenen Stelle die Speiseleitung in den Pufferbehälter. Ausserdem sind Schaltmittel vorgesehen, die auf eine vordere und auf eine hintere Stellung des Kolbens ansprechen und die die Pumpe in Betrieb setzen, wenn sie auf die vordere Stellung des Kolbens ansprechen, und die die Pumpe ausser Betrieb setzen, wenn sie auf die hintere Stellung des Kolbens ansprechen. Dabei ist die vom Druckerzeuger auf den Kolben ausgeübte Kraft so auf den Förderdruck der Pumpe abgestimmt, dass der Druck in der Speiseleitung an ihrer Einmündung in den Pufferbehälter größer ist als der vom Kolben auf die Substanz ausgeübte Druck. Als Druckerzeuger eignet sich insbesondere eine druckmittelbetätigte Kolben-Zylinder-Einheit, deren Kolben beidseitig mit Druckmittel beaufschlagbar ist. Beim Nachfüllen des Pufferbehälters treten beim Zurückschieben des Kolbens im Pufferbehälter und in dem auf ihn einwirkenden Druckerzeuger (Kolben-Zylinder-Einheit) Reibungsverluste auf, zumal dann, wenn auch der Pufferbehälter als eine Kolben-Zylinder-Einheit ausgebildet ist. Bei Ausbildung des Druckerzeugers als doppelt wirkender Zylinder können die Reibungsverluste ausgeglichen werden, indem man den Kolben des doppelt wirkenden Zylinders auf seiner dem auf die Substanz im Pufferbehälter einwirkenden Kolben abgewandten Seite permanent mit einem vorgegebenen Druck beaufschlagt, wohingegen er auf seiner gegenüberliegenden Seite während des Betriebes der Pumpe mit einem geringeren Gegendruck beaufschlagt wird. Dieser Gegendruck wird so bemessen, dass er die beim Nachfüllen des Pufferbehälters auftretenden Reibungsverluste gerade ausgleicht. Die Höhe des Gegendrucks kann als Erfahrungswert gewonnen und dann als gleichbleibender Druck vorgegeben werden. Im übrigen wird ein ungewolltes Erhöhen der Dosiermenge während des Nachfüllvorganges durch die Druckregelung mit Hilfe des Drucksensors wirksam unterbunden.

Die Pumpe, die die Substanz aus dem Vorratsbehälter (Faß) in den Pufferbehälter fördert, reagiert träge. Beim Inbetriebsetzen der Pumpe könnte der Druck im Pufferbehälter deshalb kurzzeitig absinken, bis die Pumpe ihre volle Förderleistung erreicht hat, wenn zugleich mit dem Inbetriebsetzen der Pumpe der Gegendruck im doppelt wirkenden Zylinder aufgebaut wird. Entsprechend könnte es beim Abschalten der Pumpe geschehen, dass der Druck im Pufferbehälter kurzzeitig ansteigt, bis sich der Förderdruck der Pumpe abgebaut hat, wenn zugleich mit dem Abschalten der Pumpe auch der Gegendruck im doppelt wirkenden Zylinder abgebaut wird. Vorzugsweise ist deshalb ein Zeitverzögerungsglied vorgesehen, welches den Aufbau des Gegendrucks gegenüber dem Inbetriebsetzen der Pumpe und den Abbau des Gegendrucks gegenüber dem Ausserbetriebsetzen der Pumpe ein wenig verzögert. Der beschriebene Ausgleich der Reibungsverluste erleichtert die Druckregelung in der Substanz mit Hilfe des Drucksensors.

Der Pufferbehälter kann als Zylinder mit einem darin verschieblichen Verdrängerkolben ausgebildet sein; es kann auch ein Behälter sein, in den ein Tauchkolben eintaucht. Die dabei durch die Kolbenbewegung auftretenden Reibungsverluste vermeidet mit besonderem Vorteil ein Pufferbehälter, der ein dehnbarer Abschnitt der Speiseleitung ist, welchen der Druckerzeuger von aussen mit Druck beaufschlagt. Am einfachsten verwirklicht man einen solchen Pufferbehälter, indem man zwei Rohrleitungsabschnitte oder zwei Rohrstutzen, die Bestandteil der Speiseleitung sind, durch einen dehnbaren Schlauch miteinander verbindet und diese Anordnung in einer Druckkammer unterbringt, die über ein Servoventil mit vorwählbarem Druck beaufschlagt werden kann. Die Druckkammer kann z.B. als Manschette ausgebildet sein, welche die Speiseleitung in diesem Abschnitt umgibt.

Eine andere vorteilhafte Variante ist ein Pufferbehälter, der wenigstens einen Balg enthält, dessen Innenraum mit einer steuerbaren Druckmittelquelle verbunden ist. In beiden Fällen kann das Fassungsvermögen des Pufferbehälters praktisch reibungsfrei verändert werden. Es ist auch eine Kombination dieser beiden Varianten dahingehend möglich, dass in einer Kammer oder in einem Käfig einer oder mehrere Bälge enthalten sind, die auf einen dehnbaren Abschnitt der Speiseleitung einwirken, welche durch den Käfig bzw. durch die Kammer hindurchführt. Durch die Wechselwirkung zwischen dem Balg bzw. den Bälgen und dem dehnbaren Abschnitt der Speiseleitung kann dieser nach Bedarf mehr oder weniger stark verengt oder aufgeweitet werden.

Die erfindungsgemäße Vorrichtung wirkt mit ihren Vorteilen:
- leichte Bauweise,
- kleine Baugröße,
- Verwendung eines Pufferbehälters mit minimalem Fassungsvermögen, dadurch Minimierung von durch die Kompressibilität bedingten Dosierfehlern,
- kontinuierliches, unterbrechungsfreies Auftragen der Substanzen, da ein Nachfüllen des Pufferbehälters während des Dosiervorganges ohne Beeinträchtigung der Dosiergenauigkeit möglich ist,
- Regelung des Drucks in der Substanz an einer nahe bei der Mündung der Düse gelegenen Stelle,
- einfache, insbesondere druckabhängige, verzögerungsfreie Steuerung der in der Zeiteinheit dosierten Menge,
- leichte Handhabbarkeit durch einen Roboter,
allen Anforderungen in einer automatisierten Fertigung in der Automobilindustrie gerecht. Die Erfindung kann mit Erfolg auch in anderen Bereichen der Technik eingesetzt werden, in denen Kleb- und Dichtstoffe mit hoher Genauigkeit dosiert abgegeben werden sollen, z.B. beim Versiegeln von Isolierglasscheiben, insbesondere für Fenster in Automobilen, die wegen ihres ungleichmässig gekrümmten Randes besondere Anforderungen an die Dosiergenauigkeit und rasche Änderung der Dosiermenge stellen.

Die Erfindung kann übertragen werden auf eine nicht kontinuierlich nachfüllbare, sondern diskontinuierlich arbeitende Vorrichtung zum Dosieren hochviskoser, pastöser, kompressibler Substanzen, die einen kleinen Vorratsbehälter zum Aufnehmen der Substanz haben, welcher in Dosierpausen nachgefüllt oder ausgewechselt wird, wobei die Düse unmittelbar am Vorratsbehälter angebracht oder mit ihm höchstens durch eine kurze Speiseleitung verbunden ist und zusammen mit dem Vorratsbehälter eine Baueinheit bildet, in welcher der Vorratsbehälter und die Düse allenfalls gegeneinander verdrehbar, im übrigen aber starr oder steif miteinander verbunden sind. Auch in einer solchen Vorrichtung sieht man erfindungsgemäß vor, das Fassungsvermögen des Vorratsbehälters durch einen unmittelbar am oder im Vorratsbehälter angeordneten Druckerzeuger zu verändern, und zwar in Kombination mit einem Drucksensor, welcher den an einer stromabwärts vom Druckerzeuger gelegenen Stelle herrschenden Druck aufnimmt und zusammen mit dem Druckerzeuger Bestandteil eines Regelkreises ist, der diesen Druck auf einen vorgegebenen Sollwert regelt. Ausgestaltungen der Erfindung, die für die unterbrechungsfrei betreibbare Vorrichtung beschrieben wurden, sind auch auf die nur diskontinuierlich betreibbare Vorrichtung übertragbar, insbesondere was die Ausbildung und Anordnung des an die Stelle des Pufferbehälters getretenen kleinen Vorratsbehälters, der Düse und des Drucksensors betrifft; dabei stellen sich zwar die von dem Anschluss einer längeren Speiseleitung herrührenden Probleme nicht, gleichwohl ist eine in der Nähe der Düsenmündung erfolgende Regelung des Drucks der Substanz auch bei der Übertragung auf eine Vorrichtung zum diskontinuierlichen Betrieb für eine hohe Dosiergenauigkeit von Vorteil.

Ausführungsbeispiele der Erfindung sind schematisch in den beigefügten Zeichnungen dargestellt.

Figur 1 zeigt eine erste Vorrichtung in einer Darstellung mit geschnittenem Pufferbehälter und mit einem Schaltbild für das zugehörige Druckmittelsystem und die Steuerungselemente,

Figur 2 zeigt als Detail den Pufferbehälter aus Fig. 1 mit einer anderen verschließbaren Düse,

Figur 3 zeigt als Detail zu Fig. 2 die Halterung für den Pufferbehälter mit der drehbar darin gelagerten Düse, aber ohne den Pufferbehälter im Längsschnitt,

Figur 4 zeigt die Ansicht auf die Halterung mit der drehbaren Düse in Richtung des Pfeils V in Fig. 3.

Figur 5 zeigt als Detail den an der Halterung gemäß Fig. 3 zu befestigenden Pufferbehälter im Längsschnitt mit aufgesetztem, aber nicht geschnittenem Betätigungszylinder für seinen Kolben,

Figur 6 zeigt eine andersartige kompakte Baueinheit aus Düse, Pufferbehälter und Druckerzeuger im Längsschnitt,

Figur 7 zeigt als Detail einen dehnbaren Pufferbehälter mit einem ihn umgebenden Druckerzeuger im Längsschnitt, und

Figur 8 zeigt als Detail in einer Darstellung wie in Fig. 7 einen Pufferbehälter, dessen Fassungsvermögen durch einen Balg zu verändern ist.

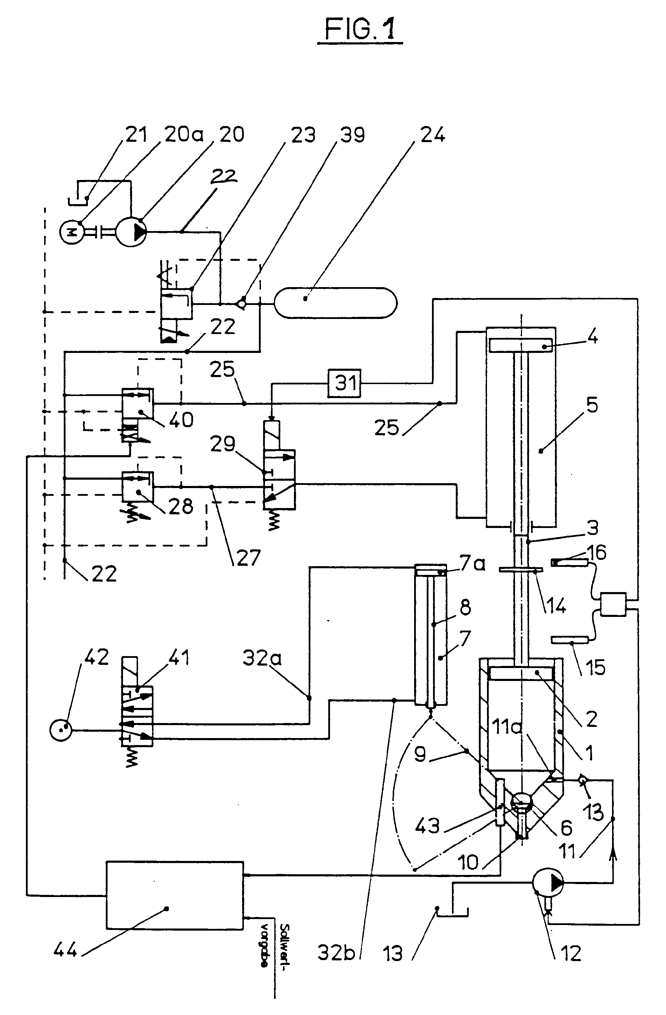

Die Vorrichtung gemäß Fig. 1 enthält als Pufferbehälter 1 einen Zylinder zur Aufnahme einer hochviskosen, pastösen, kompressiblen Substanz. Im Pufferbehälter 1 ist ein Kolben 2 verschiebbar angeordnet, der durch eine Kolbenstange 3 mit dem Kolben 4 eines doppelt wirkenden Druckmittelzylinders 5 verbunden ist, der als Druckerzeuger für den Pufferbehälter 1 dient. Der Druckmittelzylinder 5 kann hydraulisch oder pneumatisch betätigt sein, im vorliegenden Fall sei angenommen, dass er hydraulisch betätigt wird.

In der Spitze des Pufferbehälters 1 befindet sich ein Stellventil 6 in Gestalt eines Drehschieberventiles, welches mittels eines hydraulisch oder pneumatisch betätigten Stellzylinders 7 betätigt werden kann, dessen Kolbenstange 8 an einem mit dem drehbaren Ventilkörper verbundenen Schwenkhebel 9 angelenkt ist, welcher in der Zeichnung nur symbolisch dargestellt ist. Unmittelbar vor dem Drehschieberventil 6 ist eine Düse 10 ausgebildet.

In der Nähe des Drehschieberventils 6 mündet in den Pufferbehälter 1 eine Speiseleitung 11, welche von einer Pumpe 12 kommt, die aus einem Vorratsbehälter 13, bei dem es sich üblicherweise um ein Faß handelt, die hochviskose Substanz herauspumpt und in den Pufferbehälter 1 füllt. Damit der Kolben 2 die Substanz nicht in die Speiseleitung 11 zurückdrücken kann, ist in dieser ein Rückschlagventil 13 angeordnet.

Auf der Kolbenstange 3 ist ein Vorsprung 14 angeordnet, bei dem es sich im dargestellten Ausführungsbeispiel um einen Ring handelt. Neben der Kolbenstange 3 sind in Längsrichtung der Kolbenstange hintereinander als Schaltmittel für die Steuerung der Kolbenbewegung zwei Sensoren 15 und 16 angeordnet, welche auf die Lage des Vorsprungs 14 ansprechen.

Das Druckmittelsystem für die Betätigung des Druckmittelzylinders 5 und des Stellzylinders 7 umfaßt eine Druckmittelpumpe 20, die durch einen Motor 20a betätigt wird und die das Druckmittel, nämlich eine Hydraulikflüssigkeit, aus einem Vorratsbehälter 21 in eine Hauptdruckmittelleitung 22, die durch ein Druckbegrenzungsventil 23 abgesichert und über ein Rückschlagventil 39 mit einem Druckspeicher 24 verbunden ist. Zur Druckbeaufschlagung der Rückseite des Kolbens 4 führt von der Hauptdruckmittelleitung 22 eine Zweigleitung 25, in welcher ein proportional steuerbares Druckminderventil 40 liegt, zum hinteren Ende des Zylinders 5. Zur Druckbeaufschlagung der Vorderseite des Kolbens 5 führt von der Hauptdruckmittelleitung 22 eine weitere Zweigleitung 27, in welcher ein Druckminderventil 28 liegt, zum vorderen Ende des Zylinders 5.

Der Stellzylinder 7 wird in diesem Beispiel pneumatisch betätigt. Zu diesem Zweck ist ein 4/2-Wegeventil 41 mit zwei Entlüftungen vorgesehen, welches einerseits mit einer Druckluftquelle 42 und andererseits mit den beiden Enden des doppelt wirkenden Zylinders 7 verbunden ist.

In der dargestellten Stellung des Ventils 41 wird die Vorderseite des Kolbens 7a mit Druckluft beaufschlagt und dadurch das Ventil 6 im Pufferbehälter 1 völlig geöffnet. In der zweiten Stellung des Ventils 41 wird die Rückseite des Kolbens 7a beaufschlagt und dadurch das Ventil 6 völlig geschlossen.

An der Spitze des Pufferbehälters 1 ist ein Drucksensor 43 vorgesehen, bei dem es sich vorzugsweise um einen solchen handelt, der mit Dehnungsmeßstreifen arbeitet. Der Drucksensor 43 und das Proportional-Druckminderventil 40 sind zur Bildung eines Regelkreises für den Druck in der Substanz mit einem Regler 44 verbunden.

Die Vorrichtung arbeitet wie folgt:

Der Kolben 4 wird auf seiner Rückseite über die Zweigleitung 25 mit einem vorgegebenen Druck beaufschlagt. Bei geöffnetem Ventil 6 mit unveränderlichem Öffnungsquerschnitt bestimmt der vorgegebene, aber kontrolliert veränderbare Druck auf den Kolben 4 die in der Zeiteinheit aus dem Dosierzylinder 1 ausgepreßte Menge der Substanz. Diese Menge wird dadurch bestimmt, dass dem Regler 44 ein Sollwert vorgegeben wird, der von einer numerischen Steuerung kommen kann. Der Regler 44 regelt dann die gewünschte Dosiermenge ausserordentlich rasch und exakt ein.

Alternativ ist es möglich, den Druck in der Substanz auf einen konstanten Wert zu regeln und durch Verändern des Öffnungsquerschnitts des Ventils 6 mittels des Stellzylinders 7 die in der Zeiteinheit aus der Düse 10 austretende Menge zu verändern. Wenn die Pumpe 20 stillsteht, wird der Kolben 2 solange vorgeschoben, bis der Vorsprung 14 auf der Kolbenstange 3 dem vorderen Sensor 15 gegenüberliegt, so dass dieser anspricht und ein Signal abgibt, welches einerseits die Pumpe 12 in Betrieb setzt und andererseits zeitverzögert das Magnetventil 29 in seine zweite Stellung verschiebt, in welcher die Zweigleitung 27 nicht unterbrochen ist, so dass der Kolben 4 auf seiner Vorderseite von einem Gegendruck beaufschlagt wird; eine realistische Größe des Gegendrucks ist 10 bar. Durch diesen Gegendruck werden die beim Zurückschieben des Kolbens 4 und des Kolbens 2 auftretenden Reibungsverluste ausgeglichen und dadurch eine Erhöhung des Drucks im Pufferbehälter 1 durch die von der Pumpe 12 eingespeiste Substanz vermieden. Da nach dem Inbetriebsetzen der Pumpe 12 eine gewisse Zeitspanne verstreicht, bis sich der Förderdruck der Pumpe 12 bis zur Einmündung 11a der Speiseleitung 11 in den Pufferbehälter 1 fortgepflanzt hat, würde im Pufferbehälter 1 für die Dauer einer entsprechenden Zeitspanne eine Druckabsenkung auftreten, wenn der Kolben 2 durch Verstellen des Magnetventils 29 gleichzeitig mit dem Inbetriebsetzen der Pumpe 12 von seinem Druck teilweise entlastet würde. Dem wird durch das Zeitverzögerungsglied 31 begegnet, welches die Betätigung des Magnetventils 29 um eine gewisse Zeitspanne, die als Erfahrungswert gewonnen werden kann, verzögert. Diese Zeitverzögerung liegt in der Größenordnung zwischen 0,1 s und 0,5 s.

Die Pumpe 12 fördert mit einem Druck, der größer als der vom Kolben 2 ausgeübte Druck ist, die Substanz aus dem Vorratsbehälter 13 in den Pufferbehälter 1, wobei der Kolben 2 zurückweicht. Während dieses Nachfüllvorganges kann weiterhin mit gleichbleibender Dosiergenauigkeit die Substanz aus der Düse 10 ausgepreßt werden. Der Nachfüllvorgang endet, wenn der Vorsprung 14 vor dem zweiten, hinteren Sensor 16 angelangt ist, woraufhin dieser anspricht und einerseits die Pumpe 12 und wiederum zeitverzögert das Magnetventil 29 in seine in der Zeichnung dargestellte Stellung verschiebt, so dass die Vorderseite des Kolbens 4 drucklos wird. Zu diesem Zeitpunkt dient die Zeitverzögerung dazu, den Gegendruck im Zylinder 4 solange aufrechtzuerhalten, bis in der Speiseleitung 11 nach dem Abschalten der Pumpe ein Druckausgleich stattgefunden hat. Die Größe der Zeitverzögerung liegt in derselben Größenordnung wie beim Einschalten der Pumpe 12.

Die beiden Sensoren 15 und 16 sind so angeordnet, dass sich die beiden Kolben 2 und 4 stets in schwimmender Stellung befinden.

Die dargestellte Vorrichtung erlaubt es, ohne Unterbrechung mit gleichbleibender Dosiergenauigkeit eine hochviskose, pastöse Substanz aufzutragen, solange von der Pumpe 12 aus einem Faß, welches abseits stehen kann, Substanz stetig oder intermittierend in ausreichender Menge nachgefördert wird. Werden zwei Fässer vorgesehen, aus denen im Wechsel die Substanz abgepumpt werden kann, dann führt auch ein Faßwechsel nicht zu einer Unterbrechung des Dosiervorgangs.

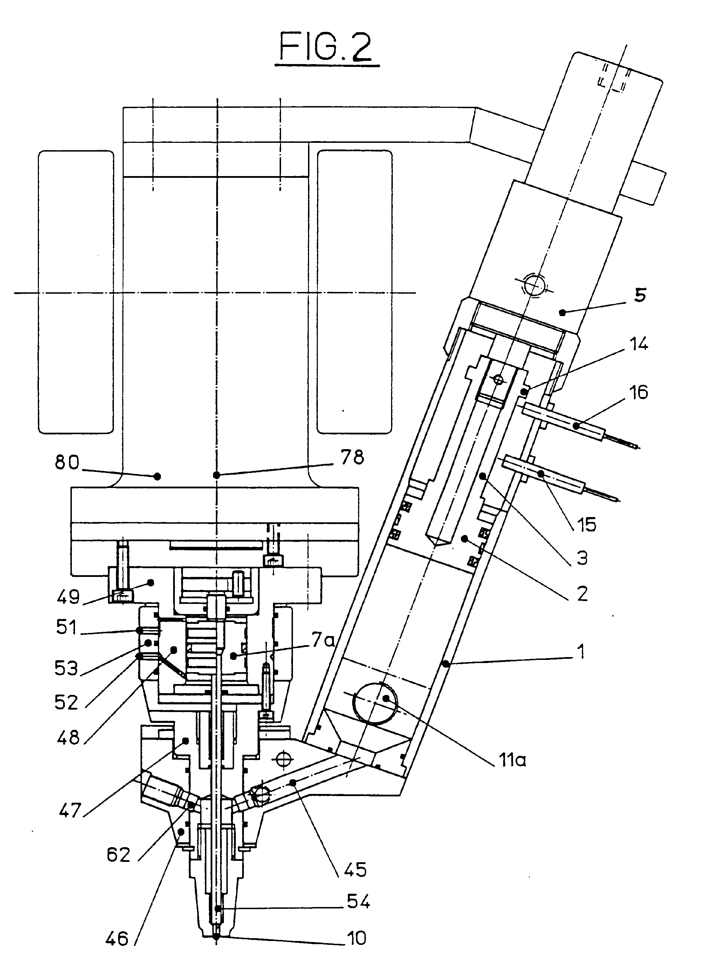

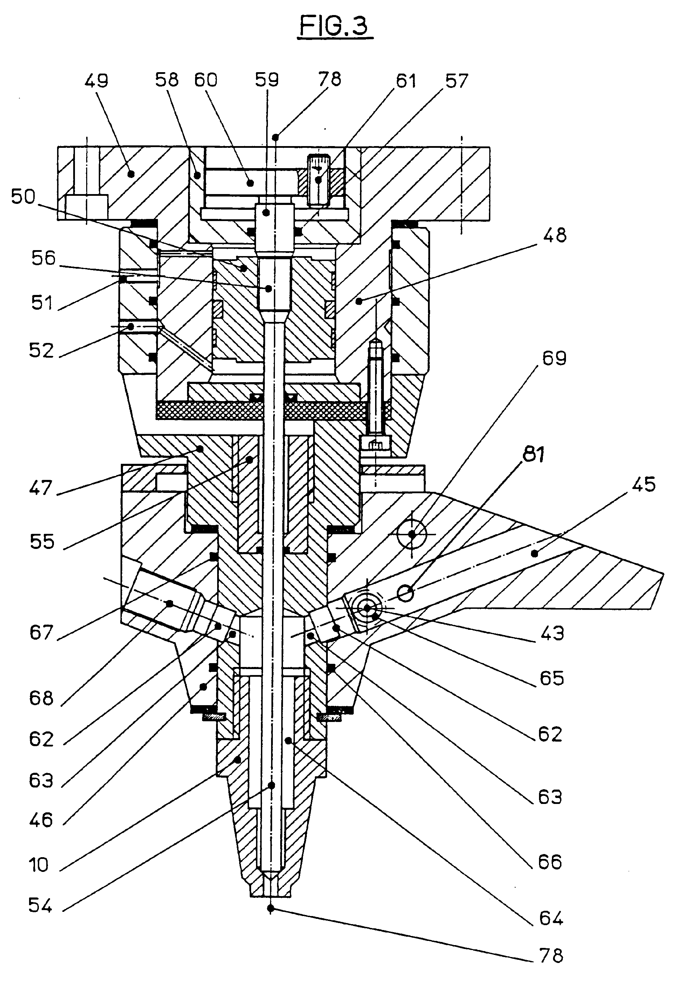

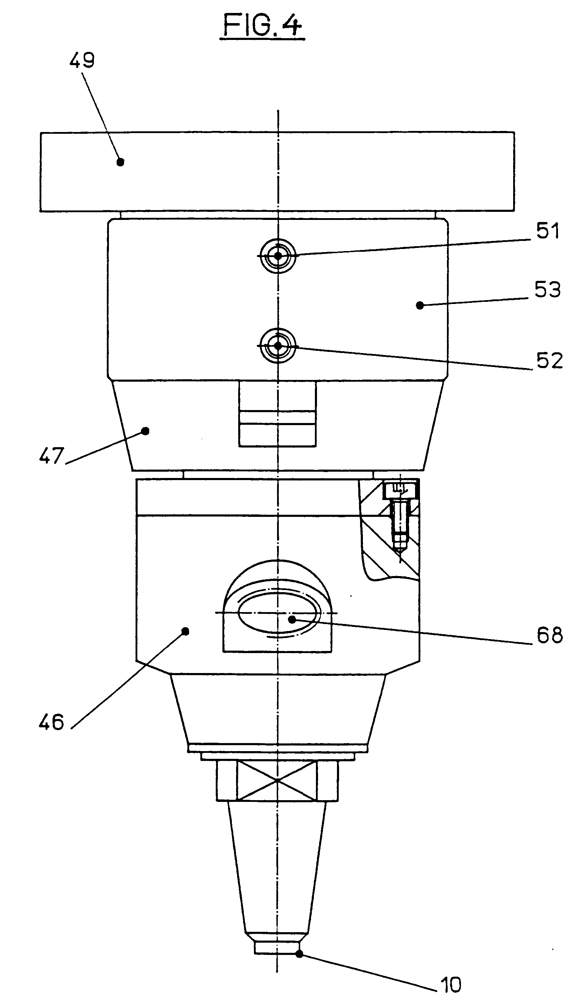

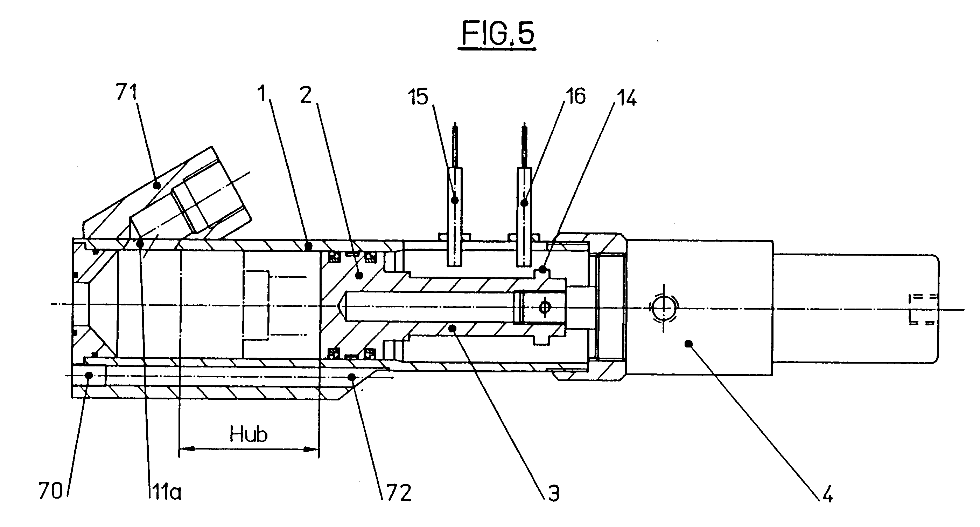

Die Figuren 2 bis 5 zeigen ein praktisch ausgeführtes Beispiel des Pufferbehälters 1 mit angesetzter Düse 10. Dazu ist eine Halterung 46 vorgesehen, in welcher eine längs durchbohrte Welle 47 drehbar gelagert ist. In das vordere Ende der Welle 47 ist die Düse 10 eingeschraubt. Deshalb wird die Welle 47 auch als Düsenwelle bezeichnet. Mit dem hinteren Ende der Düsenwelle 47 ist ein Zylinder 48 verschraubt, der an seinem hinteren Ende einen Flansch 49 hat, mit dem er an einem Roboter 80 angebracht werden kann. Im Zylinder 48 ist ein Kolben 50 angeordnet, welcher durch zwei seitliche Anschlüsse 51 und 52 in einem den Zylinder 48 umgebenden Ring 53 beidseitig mit einem Druckmittel beaufschlagt werden kann. Im Kolben 50 ist eine koaxial zur Düse verlaufende Nadel 54 befestigt, welche zum Verschließen der Düse 10 dient. In der Düsenwelle 47 ist die Nadel 54 durch eine von der Rückseite her in die Düsenwelle eingeschraubte Buchse 55 geführt.

Rückseitig ist der Zylinder 48 durch ein Verschlußteil 58 verschlossen, durch welches - unter Abdichtung mittels eines O-Ringes 57 - ein Bolzen 59 hindurchgeführt ist, welcher als Anschlag für den Kolben 50 dient. Der Bolzen 59 endet in einer mit Aussengewinde versehenen Scheibe 60, welche in eine entsprechende Gewindebohrung des Verschlußteiles 58 eingedreht ist. Durch Verdrehen der Scheibe 60 ist der Hub der Nadel 54 verstellbar. Zur Sicherung der Lage der Scheibe 60 ist in diese ein Gewindebolzen 61 eingedreht.

In die Halterung 46 führt schräg von oben eine Leitung 45 in Gestalt einer Bohrung hinein, welche in einen Ringkanal 62 mündet, welcher die Düsenwelle 47 umgibt. Die Düsenwelle besitzt an dieser Stelle zwei entsprechend schräg verlaufende kurze Bohrungen 63, welche den Ringkanal 62 mit dem axialen Kanal 64 der Düsenwelle verbinden.

In der Halterung 46 verläuft quer zur Leitung 45 eine Bohrung 65, welche nahe dem Ringkanal 63 in die Leitung 45 mündet. Diese Bohrung 65 dient zur Aufnahme eines Drucksensors 43.

Die Abdichtung der Düsenwelle 47 gegenüber der Halterung 46 erfolgt mittels zweier beidseits des Ringkanals 62 angeordneter O-Ringe 66 und 67.

Dort, wo die Leitung 45 die Halterung 46 verläßt, ist ein zylinderförmiger Pufferbehälter 1 angebracht, und zwar so, dass sein vorderes Ende mit der Eintrittsöffnung der Leitung 45 fluchtet. Der Pufferbehälter 1 besitzt an seinem vorderen Ende Gewindebohrungen 70, mit denen er an der Halterung 46 verschraubt werden kann. Am vorderen Ende des Pufferbehälters 1 ist seitlich ein schräg verlaufender Stutzen 71 angesetzt, an welchem ein Druckschlauch befestigt werden kann, durch den der Pufferbehälter 1 mit der auszupressenden Substanz nachgefüllt werden kann. Im Pufferbehälter 1 ist der Kolben 2 verschieblich angeordnet, dessen Kolbenstange 3 einen Vorsprung 14 in Gestalt eines ringförmigen Kragens hat, dessen Lage durch die beiden Sensoren 15 und 16 abgetastet wird, die die Endlagen des Kolbens 2 bestimmen. Die vordere Endlage des Kolbens 2 ist gestrichelt eingezeichnet.

Die Kolbenstange 3 führt in den Druckmittelzylinder 4 hinein, welcher den Kolben 2 betätigt.

Der Pufferbehälter 1 hat in seiner Wand wenigstens zwei längs verlaufende Bohrungen 72 zur Aufnahme wenigstens eines elektrischen Heizelementes und eines Temperatursensors. Das Heizelement dient zum Beheizen des Pufferbehälters 1 und der darin enthaltenen Substanz. Auch die Düse 10 ist beheizbar, und zwar durch Beheizung der sie umgebenden Halterung 46. Zu diesem Zweck besitzt die Halterung 46 weitere Bohrungen 68, von denen eine dargestellt ist. Diese Bohrungen dienen zur Aufnahme von elektrischen Heizelementen. Alternativ könnte eine dieser Bohrungen auch zur Aufnahme des Drucksensors 43 dienen. Nicht benötigte Bohrungen werden durch Blindstopfen verschlossen. Eine neben der Leitung 45 verlaufende Querbohrung 69 in der Halterung 46 oder eine eine in die Leitung 45 mündende, im Falle der Nichtbenutzung durch einen Blindstopfen verschlossene Bohrung 81 dient zur Aufnahme eines Temperatursensors. Als Temperatursensor eignet sich ein elektrisches Widerstandsthermometer. Die Temperatursensoren und die elektrischen Heizelemente können zu einem Regelkreis zusammengeschaltet werden, um eine möglichst gleichmässige Temperatur im Düsenbereich zu erhalten. Zweckmässigerweise werden für die Halterung 46 und für den Pufferbehälter 1 getrennte Temperaturregelkreise gebildet, für die Halterung 46 zweckmässigerweise ein PID-Regelkreis. Für den Pufferbehälter 1 reicht ein einfacher Zweipunktregler. Die Temperaturen werden am besten so eingestellt, dass die Temperatur im Pufferbehälter 1 ein wenig unter der Temperatur in der Halterung 46 liegt.

Die Bohrung 81 eignet sich besonders zur Aufnahme eines Temperatursensors, um bei kalt zu verarbeitenden Substanzen den Einfluß einer unerwünschten Temperaturerhöhung durch temperaturabhängiges Nachregeln des Drucks auszugleichen.

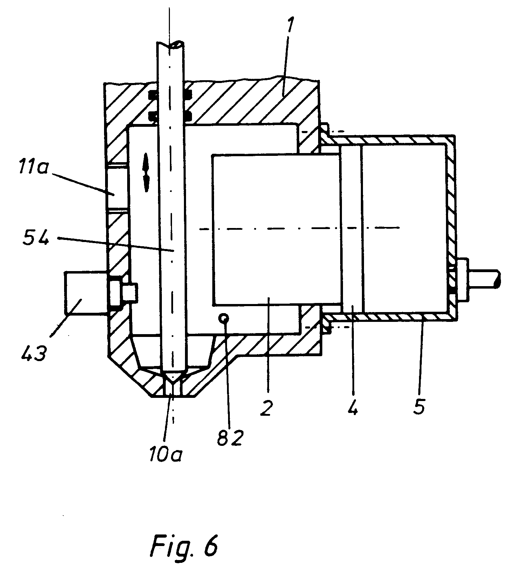

In den Ausführungsbeispielen, die in den Figuren 6, 7 und 8 dargestellt sind, wurden aus Gründen der Vereinfachung Teile, die in ihrer Funktion Teilen im vorhergehenden Ausführungsbeispiel entsprechen, mit denselben Bezugszahlen bezeichnet wie diese.

Figur 6 zeigt eine besonders kompakte Baugruppe, in welcher das Puffervolumen im Düsenkörper untergebracht ist. Der Düsenkörper ist mithin zugleich der Pufferbehälter 1 mit einer an seiner Unterseite vorgesehenen Düsenmündung 10a, welche mittels einer den Pufferbehälter 1 durchquerenden Ventilnadel 54 verschließbar ist. An der einen Seite des Pufferbehälters 1 ist ein Druckmittelzylinder 5 angeflanscht, in welchem ein Kolben 4 verschieblich geführt ist, welcher sich in einen dicken Tauchkolben 2 fortsetzt, welcher in den Pufferbehälter 1 hineinragt und je nach seiner Stellung das Fassungsvermögen des Pufferbehälters 1 mehr oder weniger beschränkt. Dem Tauchkolben 2 gegenüberliegend befindet sich in der Wand des Pufferbehälters 1 ein Drucksensor; in einer weiteren Bohrung in der Wand des Pufferbehälters steckt nahe bei der Düsenmündung 10a ein Temperatursensor 82. Die Regelung des Drucks der Substanz kann auf diese Weise in unmittelbarer Nähe der Mündung 10a der Düse erfolgen.

Weiterhin befindet sich in der Wand des Pufferbehälters 1 eine Öffnung 11a zum Anschluß einer Speiseleitung für die Substanz.

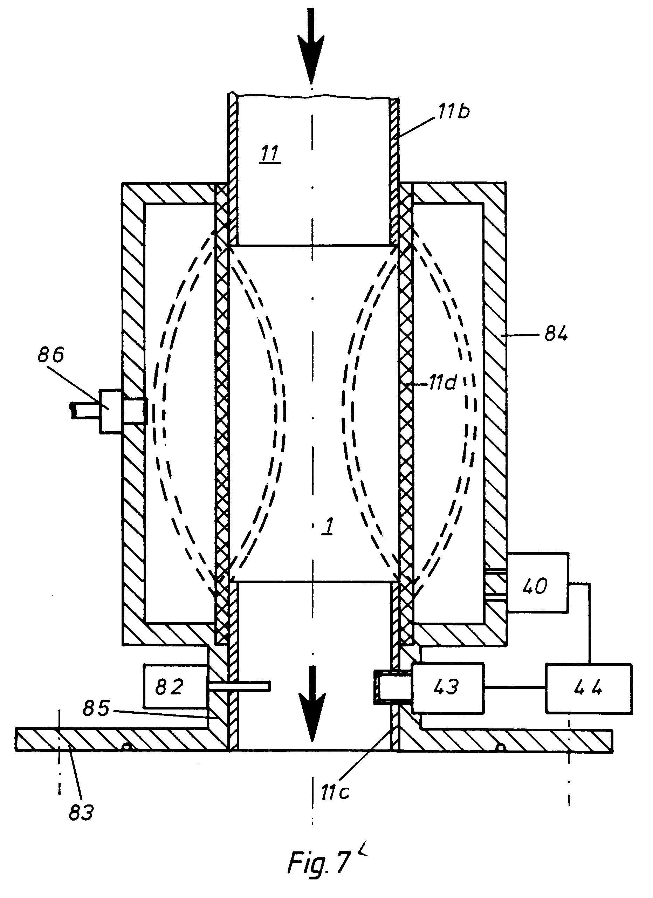

Figur 7 zeigt ein besonders elegantes Ausführungsbeispiel für eine aus Pufferbehälter und Druckerzeuger gebildete Baueinheit.

Zwei Rohrleitungsabschnitte 11b und 11c der Speiseleitung 11 sind durch einen dehnbaren Schlauch 11d druckdicht miteinander verbunden. Der Schlauch 11d ist druckdicht von einer Kammer 84 umgeben, in welche durch ein Servoventil 40 von aussen ein Druckmittel eingeleitet werden kann. An seinem einen Ende hat die Kammer 84 einen Fortsatz 85 in Gestalt eines Stutzens, welcher den Rohrleitungsabschnitt 11c umschließt und in einem Flansch 83 endet, welcher zur Befestigung an einer Halterung dient, beispielsweise an der Halterung 46 in Figur 2 anstelle des dort vorgesehenen Pufferbehälters 1. Alternativ könnte an dem Flansch 83 unmittelbar eine Düse befestigt werden.

Am Stutzen 85 sind zwei Bohrungen vorgesehen, die in das Innere des Rohrleitungsabschnitts 11c führen. In der einen Bohrung steckt ein Drucksensor 43 und in der anderen, vorzugsweise gegenüberliegend angeordneten Bohrung steckt ein Temperatursensor 82. Lediglich schematisch angedeutet wurde, dass der Drucksensor 43 zusammen mit dem Servoventil 40 und einem Regler 44 Bestandteil eines Druckregelkreises ist. Auch der Temperatursensor 82 kann in einen Regelkreis eingebunden sein.

In drucklosem Zustand ist der Schlauch 11d zylindrisch. Wird durch eine Pumpe Substanz in Pfeilrichtung zugeführt, kann sich der Schlauch 11d ausdehnen, wenn aus der Düse weniger Substanz oder keine Substanz ausfließt. Ist die Speisepumpe abgeschaltet oder fördert sie weniger Substanz, als aus der Düse ausströmt, dann kann sich der Schlauch 11d verengen. In beiden Fällen wird das Servoventil 40 durch den Regler 44 so gesteuert, dass im Rohrleitungsabschnitt 11c, wo sich der Drucksensor 43 befindet, der für ein exaktes Dosieren erforderliche Druck einstellt.

Zur Steuerung der Speisepumpe ist zweckmässigerweise in einer Bohrung der Kammer 84 ein Sensor 86 angeordnet, welcher auf die Lage des Schlauches 11d anspricht.

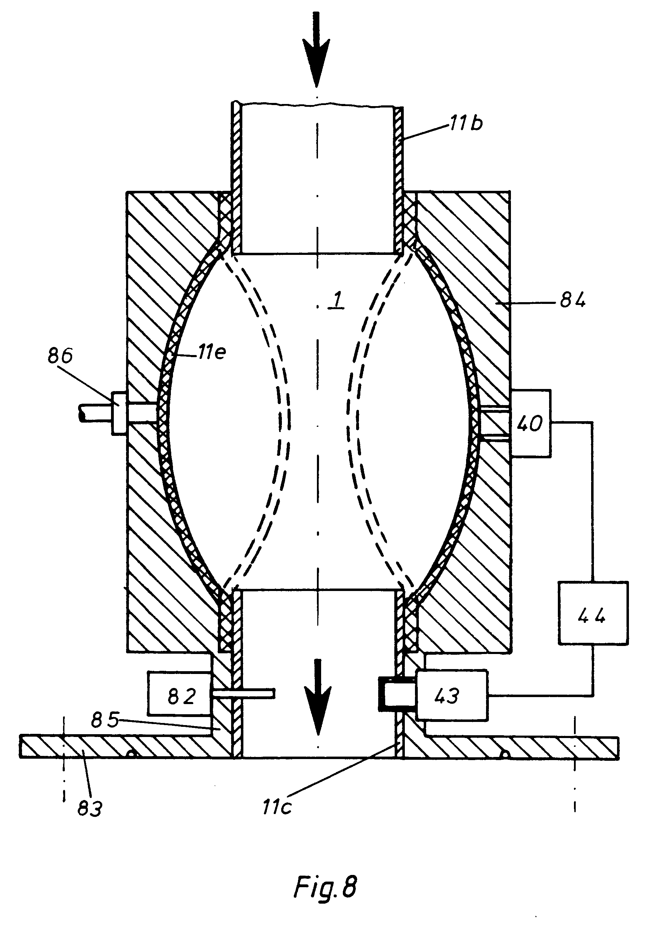

Das in Figur 8 dargestellte Ausführungsbeispiel ist dem in Figur 7 dargestellten sehr ähnlich, so dass auf die Beschreibung zur Figur 7 Bezug genommen werden kann. Im Unterschied zur Figur 7 sind die beiden Rohrleitungsabschnitte 11b und 11c in Figur 8 nicht durch einen zylindrischen Schlauch miteinander verbunden, sondern durch einen tonnenförmigen Balg 11e, der sich in seiner in ausgezogenen Linien dargestellten Lage, in welcher der Pufferbehälter sein maximales Fassungsvermögen hat, einer entsprechend tonnenförmig ausgebildeten inneren Oberfläche der Kammer 84 anschmiegt. Entsprechend der Druckbeaufschlagung durch das Servoventil 40 kann sich der Balg 11e von der Wandung der Kammer 84 lösen und den Durchgangsquerschnitt des Pufferbehälters verengen.

**Patentansprüche**

1. Vorrichtung zum Abgeben hochviskoser, pastöser, kompressibler Substanzen, insbesondere zum Auftragen von Dicht- und Klebstoffen auf Karosserieteile im Karosseriebau, mit einem Vorratsbehälter (13) zum Aufnehmen der Substanz, mit einer Düse (10) für den Austritt der Substanz, mit einer vom Vorratsbehälter (13) zur Düse (10) führenden Speiseleitung (11, 45), mit einer Pumpe (12) zum Einspeisen der Substanz in die Speiseleitung (11, 45), und mit einem Pufferbehälter (1), dessen Fassungsvermögen durch einen unmittelbar am oder im Pufferbehälter (1) angeordneten Druckerzeuger (2 bis 5) veränderbar ist, der zusätzlich zu der Pumpe (12) vorgesehen ist, **dadurch gekennzeichnet,** dass der Pufferbehälter (1) nahe bei der Mündung der Düse (10) angeordnet ist und ein den im Strömungsweg (45, 64, 10) an einer stromabwärts vom Druckerzeuger (2 bis 5) gelegenen Stelle herrschenden Druck aufnehmender Drucksensor (43) vorgesehen ist, welcher zusammen mit dem Druckerzeuger (2 bis 5) Bestandteil eines Regelkreises (43, 44, 40, 25, 2 bis 5) ist, der diesen Druck auf einen vorgegebenen Sollwert regelt.

2. Vorrichtung nach Anspruch 1, **dadurch gekennzeichnet,** dass zur Änderung der in der Zeiteinheit abgegebenen Menge der Substanz bei unverändertem bzw. unveränderlichem lichten Querschnitt des Strömungsweges (45, 64, 10) zwischen dem Pufferbehälter (1) und der Mündung der Düse (10) der Sollwert des Drucks durch veränderliche Sollwertvorgabe am Regler (44) einstellbar ist.

3. Vorrichtung nach Anspruch 1 oder 2, **dadurch gekennzeichnet,** dass das Fassungsvermögen des Pufferbehälters (1) um höchstens 100 ml, vorzugsweise um nicht mehr als 70 ml, veränderbar ist.

4. Vorrichtung nach Anspruch 1, 2 oder 3, **dadurch gekennzeichnet,** dass das Fassungsvermögen des Pufferbehälters (1) größenordnungsmässig 100 ml, vorzugsweise nicht mehr als 100 ml beträgt.

5. Vorrichtung nach einem der vorstehenden Ansprüche, **dadurch gekennzeichnet,** dass die vom Pufferbehälter (1) zur Mündung der Düse (10) führende Leitung (45, 64) kürzer als 20 cm, vorzugsweise kürzer als 15 cm ist.

6. Vorrichtung nach einem der vorstehenden Ansprüche, **dadurch gekennzeichnet,** dass die vom Pufferbehälter (1) zur Mündung der Düse (10) führende Leitung (45, 64) so kurz wie unter den im Anwendungsfall gegebenen technischen Randbedingungen möglich ist.

7. Vorrichtung nach einem der vorstehenden Ansprüche, **dadurch gekennzeichnet,** dass der Drucksensor (43) so nahe wie unter den im Anwendungsfall gegebenen technischen Randbedingungen möglich bei der Mündung der Düse (10) liegt.

8. Vorrichtung nach einem der vorstehenden Ansprüche, **dadurch gekennzeichnet,** dass die Düse (10) und der Pufferbehälter (1) auf einer gemeinsamen Halterung (46) angeordnet sind.

9. Vorrichtung nach Anspruch 8, **dadurch gekennzeichnet,** dass die Leitung (45) vom Pufferbehälter (1) zur Düse (10) in der Halterung (46) verläuft.

10. Vorrichtung nach Anspruch 8, **dadurch gekennzeichnet,** dass der Pufferbehälter (1) in der Halterung (46) für die Düse (10) angeordnet ist.

11. Vorrichtung nach einem der Ansprüche 1 bis 8, **dadurch gekennzeichnet,** dass der Pufferbehälter in der Düse (10) angeordnet ist.

12. Vorrichtung nach einem der vorstehenden Ansprüche, **dadurch gekennzeichnet,** dass der Drucksensor (43) zwischen dem Pufferbehälter (1) und der Mündung der Düse (10) angeordnet ist.

13. Vorrichtung nach Anspruch 6 und 12, **dadurch gekennzeichnet,** dass der Drucksensor (43) an dem der Düse (10) zunächst gelegenen Ende der Leitung (45) angeordnet ist.

14. Vorrichtung nach einem der vorstehenden Ansprüche, **dadurch gekennzeichnet,** dass die Düse (10) unmittelbar an dem Pufferbehälter (1) angeordnet ist.

15. Vorrichtung nach einem der vorstehenden Ansprüche, **dadurch gekennzeichnet,** dass in der Düse (1a) ein Ventil (6, 54) zum Verschließen der Düse (10) vorgesehen ist.

16. Vorrichtung nach Anspruch 15, **dadurch gekennzeichnet,** dass das Ventil (54) ein Sitzventil, insbesondere ein Nadelventil ist.

17. Vorrichtung nach Anspruch 15, **dadurch ge-** kennzeichnet, dass das Ventil (6) ein Drehschieberventil ist.

18. Vorrichtung nach Anspruch 15, **dadurch gekennzeichnet,** dass das Ventil (6) ein Stellventil ist.

19. Vorrichtung nach einem der vorstehenden Ansprüche, **dadurch gekennzeichnet,** dass die Düse (10) um eine ihre Düsenmündung durchsetzende Achse (48) relativ zum Pufferbehälter (1) drehbar auf einer Halterung (46) gelagert ist wohingegen der Pufferbehälter (1) starr mit der Halterung (46) verbunden ist.

20. Vorrichtung nach Anspruch 19, **dadurch gekennzeichnet,** dass die Achse (48) die Düsenmündung in Ausströmrichtung durchsetzt.

21. Vorrichtung nach einem der vorstehenen Ansprüche, **dadurch gekennzeichnet,** dass der Druckerzeuger (2 bis 5) eine druckmittelbetätigte Kolben-Zylinder-Einheit ist.

22. Vorrichtung nach einem der vorstehenden Ansprüche, **dadurch gekennzeichnet,** dass im Pufferbehälter (1) ein Kolben (2) verschieblich geführt ist, auf welchen der Druckerzeuger (2 bis 5) einwirkt,

dass an einer vor dem Kolben (2) in seiner vordersten Stellung gelegenen Stelle in den Pufferbehälter (1) die Speiseleitung (11) einmündet, und dass auf eine vordere und auf eine hintere Stellung des Kolbens (2) ansprechende Schaltmittel (15, 16) vorgesehen sind, die auf die vordere Stellung des Kolbens (2) ansprechen und dadurch die Pumpe (12) in Betrieb setzen, und die auf die hintere Stellung des Kolbens (2) ansprechen und dadurch die Pumpe (12) ausser Betrieb setzt,

wobei die vom Druckerzeuger (3 bis 5) auf den Kolben (2) ausgeübte Kraft so auf den Förderdruck der Pumpe (12) abgestimmt ist, dass der Druck in der Speiseleitung (11) an ihrer Einmündung (11a) in den Pufferbehälter (1) größer ist als der vom Kolben (2) auf die Substanz ausgeübte Druck.

23. Vorrichtung nach Anspruch 21 und 22, **dadurch gekennzeichnet,** dass der Kolben (4) des Druckerzeugers (5) beidseitig mit Druckmittel beaufschlagbar ist.

24. Vorrichtung nach Anspruch 23, **dadurch gekennzeichnet,** dass der Kolben (4) des Druckerzeugers (5) auf seiner dem auf die Substanz einwirkenden Kolben (2) abgewandten Seite permanent mit einem unter konstantem Druck stehenden Druckmittel beaufschlagt ist, wohingegen er auf seiner anderen Seite während des Betriebs der Pumpe (12) von einem Druckmittel beaufschlagt ist, welches unter einem geringeren Gegendruck als jener konstante Druck steht.

25. Vorrichtung nach Anspruch 24, **dadurch gekennzeichnet,** dass jener geringere Gegendruck ein vorgewählter, i.w. konstanter Druck ist.

26. Vorrichtung nach Anspruch 24 oder 25, **dadurch gekennzeichnet,** dass mindestens ein Zeitverzögerungsglied (31) vorgesehen ist, welches den Aufbau des Gegendrucks gegenüber dem Inbetriebsetzen der Pumpe (12) und den Abbau des Gegendrucks gegenüber dem Ausserbetriebsetzen der Pumpe (12) ein wenig verzögert.

27. Vorrichtung nach einem der Ansprüche 19 bis 26, **dadurch gekennzeichnet,** dass in der Halterung (46) ein Ringkanal (62) vorgesehen ist, welcher die Düse (10) oder eine diese Düse (10) tragende Welle (47) umgibt, zur Düse (10) oder ihrer Welle (47) offen ist, in welchen die vom Pufferbehälter (1) kommende Leitung (45) mündet und welcher durch einen in der Düse (10) bzw. ihrer Welle (47) verlaufenden Kanal (64) mit der Mündung der Düse (10) verbunden ist.

28. Vorrichtung nach Anspruch 13 und 27, **dadurch gekennzeichnet,** dass der Drucksensor (43) in der Halterung (46) in unmittelbarer Nachbarschaft des Ringkanals (62) angeordnet ist.

29. Vorrichtung nach Anspruch 16 und einem der Ansprüche 25 bis 28, **dadurch gekennzeichnet,** dass die Nadel (54) durch ein drehfest mit der Düse (10) verbundenes Betätigungsorgan, insbesondere einen Druckmittelzylinder (7) betätigt wird.

30. Vorrichtung nach Anspruch 29, **dadurch gekennzeichnet,** dass der Hub der Nadel (54) durch ein Verstellorgan, insbesondere durch einen verstellbaren Anschlag (59) einstellbar ist.

31. Vorrichtung nach einem der Ansprüche 1 bis 21, **dadurch gekennzeichnet,** dass der Pufferbehälter (1) ein dehnbarer Abschnitt (11d) der Speiseleitung (11) ist, den der Druckerzeuger (40, 84) von aussen mit Druck beaufschlagt.

32. Vorrichtung nach einem der Ansprüche 1 bis 21 und 31, **dadurch gekennzeichnet,** dass der Pufferbehälter (1) wenigstens einen Balg (11e) enthält, dessen Innenraum oder Aussenraum mit einer steuerbaren Druckmittelquelle (40) verbunden ist.

33. Vorrichtung nach Anspruch 1 und 18, **dadurch gekennzeichnet,** dass der als Sollwert vorgegebene Druck konstant ist.

34. Vorrichtung nach einem der vorstehenden Ansprüche, **dadurch gekennzeichnet,** dass neben oder in der Speiseleitung (45, 64) an einer stromabwärts vom Druckerzeuger (2 bis 5) gelegenen Stelle (69, 81) ein Temperatursensor angeordnet ist.

35. Vorrichtung nach Anspruch 34, **dadurch gekennzeichnet,** dass für heiß zu verarbeitende Substanzen ein oder mehrere Heizelemente zum Beheizen des Pufferbehälters (1) und/oder der Düse (10) vorgesehen sind und dass zur Steuerung der Heizelemente der Temperatursensor vorgesehen ist, welcher zusammen mit den Heizelementen Bestandteil eines Regelkreises ist.

36. Vorrichtung nach Anspruch 35, **dadurch gekennzeichnet,** dass für die Düse (10) bzw. ihre Halterung (46) und für den Pufferbehälter (1) gesonderte Heizkreise mit je wenigstens einem Heizelement und einem es steuernden Temperatursensor vorgesehen sind.

37. Vorrichtung nach Anspruch 34, **dadurch gekennzeichnet,** dass für kalt zu verarbeitende Substanzen der Temperatursensor (69) zusammen mit dem Druckerzeuger (2 bis 5) Bestandteil eines Regelkreises ist, dessen Regler (44) den Druck in Abhängigkeit von der gemessenen Temperatur nach gespeicherten Erfahrungswerten nachregelt.

38. Vorrichtung nach einem der vorstehenden Ansprüche, **dadurch gekennzeichnet,** dass der Pufferbehälter (1) eine Kolben-Zylinder-Einheit mit Tauchkolben oder Verdrängerkolben (2) ist.

39. Vorrichtung nach Anspruch 11 und einem der Ansprüche 34 bis 37, **dadurch gekennzeichnet,** dass der Temperatursensor (82) und der Drucksensor (43) im Pufferbehälter (1) angeordnet sind.

40. Vorrichtung zum Dosieren hochviskoser, pastöser, kompressibler Substanzen, insbesondere zum Auftragen von Dicht- und Klebstoffen auf Karosserieteile im Karosseriebau,
mit einem kleinen Vorratsbehälter (1) zum Aufnehmen der Substanz, dessen Fassungsvermögen durch einen unmittelbar am oder im Vorratsbehälter (1) angeordneten Druckerzeuger (2 bis 5) veränderbar ist,
und mit einer Düse (10) für den Austritt der Substanz,

**dadurch gekennzeichnet,** dass die Düse (10) unmittelbar am Vorratsbehälter (1) angebracht oder mit ihm höchstens durch eine kurze Speiseleitung (45) verbunden ist und zusammen mit dem Vorratsbehälter (1) eine allenfalls gegeneinander verdrehbare, im übrigen aber starre oder steife Baueinheit bildet,
in Kombination mit einem den an einer stromabwärts vom Druckerzeuger (2 bis 5) gelegenen Stelle herrschenden Druck aufnehmenden Drucksensor (43), welcher zusammen mit dem Druckerzeuger (2 bis 5) Bestandteil eines Regelkreises (43, 44, 40, 25, 2 bis 5) ist, der diesen Druck auf einen vorgegebenen Sollwert regelt.

## Claims

1. An apparatus for delivering pasty compressible substances of high viscosity, particularly for applying sealants and adhesives to automobile body parts in the manufacture of automobile bodies,
    comprising a supply container (13) for holding the substance,
    comprising a nozzle (10) for discharging the substance,
    comprising a feed line (11, 45) leading from the supply container (13) to the nozzle (10),
    comprising a pump (12) for feeding the substance into the feed line (11, 45),
    and comprising a buffer container (1), which,
    has a capacity which is variable by a pressure generator (2 to 5), which is disposed directly on or in the buffer container (1) and is provided in addition to the pump (12),
    characterized in that the buffer container is disposed close to the mouth of the nozzle and a pressure sensor (43) is provided which detects the pressure in the flow path (45, 64, 10) at a location which is downstream of the pressure generator (2 to 5), which pressure sensor together with the pressure generator (2 to 5) is included.

2. An apparatus according to claim 1, characterized in that a change of the rate of discharge of the substance while the flow area of the flow path (45, 64, 10) between the buffer container (1) and the mouth of the nozzle (10) is not changed or is unvariable can be effected in that the desired value of the pressure is adjusted by the adjustment of a variable setpoint at the controller (44).

3. An apparatus according to claim 1 or 2, characterized in that the capacity of the buffer container (1) can be changed by not more than 100 ml, preferably by not more than 70 ml.

4. An apparatus according to claim 1, 2 or 3, characterized in that the capacity of the buffer container is of an order of 100 ml, preferably not in excess of 100 ml.

5. An apparatus according to any of the preceding claims, characterized in that the line (45, 64) leading from the buffer container (1) to the mouth of the nozzle (10) is shorter than 20 cm, preferably shorter than 15 cm.

6. A apparatus according to any of the preceding claims, characterized in that the line (45, 64) leading from the buffer container (1) to the mouth of the nozzle (10) is as short as is possible under the boundary conditions existing in the specific application.

7. An apparatus according to any of the preceding claims, characterized in that the pressure sensor (43) is disposed as close as is possible to the mouth of the nozzle (10) under the technical boundary conditions existing in the specific application.

8. An apparatus according to any of the preceding claims, characterized in that the nozzle (10) and the buffer container (1) are provided on a common holder (46).

9. An apparatus according to any of the preceding claims, characterized in that the line (45) leading from the buffer container (1) to the nozzle (10) extends in the holder (46).

10. An apparatus according to claim 8, characterized in that the buffer container (1) is disposed in the holder (46) for the nozzle (10).

11. An apparatus according to any of claims 1 to 8, characterized in that the buffer container is arranged in the nozzle (10).

12. An apparatus according to any of the preceding claims, characterized in that the pressure sensor (43) is disposed between the buffer container (1) and the mouth of the nozzle (10).

13. An apparatus according to claims 6 and 12, characterized in that the pressure sensor (43) is provided at that end of the line (45) which is nearest to the nozzle (10).

14. An apparatus according to any of the preceding claims, characterized in that the nozzle (10) adjoins the buffer container (1).

15. An apparatus according to any of the preceding claims, charaterized in that a valve (6, 54) for closing the nozzle (10) is provided in the nozzle (1a).

16. An apparatus according to claim 15, characterized in that the valve (54) is a seat valve particularly a needle valve.

17. An apparatus according to claim 15, characterized in that the valve (6) is a rotary plug valve.

18. An apparatus according to claim 15, characterized in that the valve (6) is a final control valve.

19. An apparatus according to any of the preceding claims, characterized in that the nozzle (10) is rotatably mounted on a holder (46) for rotation relative to the buffer container (1) about an axis (48) which extends through the mouth of the nozzle (10) and the buffer container (1) is rigidly connected to the holder (46).

20. An apparatus according to claim 19, characterized in that the axis (48) extends through the nozzle mouth in the discharge direction.

21. An apparatus according to any of the preceding claims, characterized in that the pressure generator (2 to 5) is a fluid-operable piston-cylinder unit.

22. An apparatus according to any of the preceding claims, characterized in that a piston (2) acted upon by the pressure generator (2 to 5) is slidably guided in the buffer container (1),
that the feed line (11) opens into the buffer container (1) at a location in front of the piston (2) in its foremost position,
and that switching means (15, 16) are provided, which are responsive to the piston in its forward and rear positions and respond to the forward position of the piston (2) by turning on the pump (12) and respond to the rear position of the piston (2) by turning off the pump (12),
and the force exerted by the pressure generator (3 to 5) on the piston (2) is so matched to the discharge pressure of the pump (12) that the pressure in the feed line where it opens (11a) into the buffer container (1) exceeds the pressure which is exerted by the piston (2) on the substance.

23. An apparatus according to claim 21 and 22, characterized in that the piston (4) of the pressure generator (5) is adapted to be supplied with fluid at both ends.

24. An apparatus according to claim 23, characterized in that the piston (4) of the pressure generator (5) is supplied with a fluid under constant pressure at that end which faces away from the piston (2) acting on the substance and at its other end is supplied during the operation of the pump (12) with a fluid which is under a backpressure that is lower than said constant pressure.

25. An apparatus according to claim 24, characterized in that said lower backpressure is a preselected, substantially constant pressure.

26. An apparatus according to claim 24 or 25, characterized in that at least one time delay element (31) is provided, which slightly delays the build-up of the backpressure relative to the turning on of the pump (12) and slightly delays the decrease of the backpressure relative to the turning off of the pump (12).

27. An apparatus according to any of claims 19 to 26, characterized in that the holder (46) contains an annular passage (62), which surrounds the nozzle (10) or a shaft (47) which carries the nozzle (10), said annular passage is open to the nozzle (10) or to its shaft (47), the line (45) coming from the buffer container (1) opens into said annular passage and said annular passage communicates with the mouth of the nozzle (10) through a passage (64) that extends in the nozzle (10) or its shaft (47).

28. An apparatus according to claims 13 and 27, characterized in that the pressure sensor (43) is arranged in the holder (46) very close to the annular passage (62).

29. An apparatus according to claim 16 and any of claims 25 to 28, characterized in that the needle (54) is actuated by an actuator that is non-rotatably connected to the nozzle (10) and particularly consists of a fluid-operable cylinder (7).

30. An apparatus according to claim 29, characterized in that the stroke of the needle (54) is adjustable by an adjusting member, particularly by an adjustable stop (59).

31. An apparatus according to any of claims 1 to 21, characterized in that the buffer container (1) is an extensible section (11d) of the feed line and is subjected on the outside to pressure applied by the pressure generator (40, 84).

32. An apparatus according to any of claims 1 to 21 and 31, characterized in that the buffer container (1) contains at least one bellows (11e) and the interior space of the bellows or the surrounding external space communicates with a controllable source of fluid (40).

33. An apparatus according to claims 1 and 18, characterized in that the predetermined desired value for the pressure is constant.

34. An apparatus according to any of the preceding claims, characterized in that a temperature sensor is arranged beside or in the feed line (45, 64) at a location (69, 81) upstream of the pressure generator (2 to 5).

35. An apparatus according to claim 34, characterized in that one or more heating elements for heating the buffer container (1) and/or the nozzle (10) are provided for a hot processing of substances and a temperature sensor is provided, which serves to control the heating elements and which together with the heating elements is included in a feedback loop.

36. An apparatus according to claim 35, characterized in that separate heating circuits comprising each at least one heating element and a temperature sensor for controlling said heating element are respectively provided for the nozzle (10) or its holder (46) and for the buffer container (1).

37. An apparatus according to claim 34, characterized in that for a cold processing of substances the temperature sensor (69) and the pressure generator (2 to 5) are included in a feedback loop having a controller (44) for a secondary control of the pressure in dependence on the measured temperature in accordance with stored empirical values.

38. An apparatus according to any of the preceding claims, characterized in that the buffer container (1) is a piston-cylinder unit comprising a plunger or a displacer piston (2).

39. An apparatus according to claim 11 and any of claims 34 to 37, characterized in that the temperature sensor (82) and the pressure sensor (43) are disposed in the buffer container (1).

40. An apparatus for metering pasty compressible substances of high viscosity, particularly for applying sealants and adhesives to automobile body parts in the manufacture of automobile body parts, comprising a small supply container (1), which serves to hold the substance and has a capacity which is variable by a pressure generator (2 to 5), which is provided directly at or in the supply container (1),

and comprising a nozzle (10) for discharging the substance, characterized in that the nozzle is directly attached to the supply container (1) or is connected to it by not more than a short feed line (45) and which together with the supply container (1) constitutes a unit which permits a relative rotation but in other respects is rigid or stiff.

**Revendications**

1. Dispositif pour délivrer des substances très visqueuses, pâteuses, compressibles, en particulier pour l'application de substances d'étanchéification et d'adhésifs sur des éléments de carrosserie dans la fabrication de carrosseries, muni d'un récipient d'alimentation (13) destiné à contenir la substance, d'une tuyère (10) pour l'évacuation de la substance, d'un conduit d'alimentation (11, 45) allant du récipient d'alimentation (13) à la tuyère (10), d'une pompe (12) pour l'alimentation de la substance dans le conduit d'alimentation (11, 45), et d'un récipient (1) faisant office de tampon dont on peut modifier la contenance à l'intervention d'un générateur de pression (2 à 5) disposé immédiatement contre ou dans le récipient (1) faisant office de tampon, que l'on prévoit en plus de la pompe (12), caractérisé en ce que le récipient (1) faisant office de tampon est installé à proximité de l'orifice de la tuyère (10) et on prévoit un détecteur de pression (43) qui enregistre la pression régnant dans la voie d'écoulement (45, 64, 10) à un endroit situé en aval du générateur de pression (2 à 5), le détecteur de pression faisant partie, au même titre que le générateur de pression (2 à 5), d'un circuit de réglage (43, 44, 40, 25, 2 à 5) qui règle cette pression à une valeur de consigne prédéfinie.

2. Dispositif selon la revendication 1, caractérisé en ce que, pour modifier la quantité de la substance délivrée dans l'unité de temps, la section transversale de la voie d'écoulement (45, 64, 10) entre le récipient (1) faisant office de tampon et l'orifice de la tuyère (10) n'étant pas modifiée ou n'étant pas modifiable, on peut régler au régulateur (44) la valeur de consigne de la pression à l'intervention d'une référence de valeur de consigne modifiable.

3. Dispositif selon la revendication 1 ou 2, caractérisé en ce qu'on peut modifier la contenance du récipient (1) faisant office de tampon à concurrence de maximum 100 ml, de préférence à concurrence d'une valeur n'excédant pas 70 ml.

4. Dispositif selon la revendication 1, 2 ou 3, caractérisé en ce que l'ordre de grandeur de la contenance du récipient (1) faisant office de tampon est de 100 ml, de préférence, ne dépasse pas 100 ml.

5. Dispositif selon l'une quelconque des revendications précédentes, caractérisé en ce que la longueur du conduit (45, 64) qui procure un guidage entre le récipient (1) faisant office de tampon et l'orifice de la tuyère (10) est inférieure à 20 cm, de préférence inférieure à 15 cm.

6. Dispositif selon l'une quelconque des revendications précédentes, caractérisé en ce que la longueur du conduit (45, 64) allant du récipient (1) faisant office de tampon à l'orifice de la tuyère (10) est aussi courte que le permettent les conditions de compatibilité technique en vigueur dans le cas d'utilisation.

7. Dispositif selon l'une quelconque des revendications précédentes, caractérisé en ce que le détecteur de pression (43) est installé aussi près de l'orifice de la tuyère (10) que le permettent les conditions de compatibilité technique en vigueur dans le cas d'utilisation.

8. Dispositif selon l'une quelconque des revendications précédentes, caractérisé en ce que la tuyère (10) et le récipient (1) faisant office de tampon sont installés sur un dispositif de fixation (46) commun.

9. Dispositif selon la revendication 8, caractérisé en ce que le conduit (45) s'étend entre le récipient (1) faisant office de tampon et la tuyère (10) dans le dispositif de fixation (46).

10. Dispositif selon la revendication 8, caractérisé en ce que le récipient (1) faisant office de tampon est installé dans le dispositif de fixation (46) destiné à la tuyère (10).

11. Dispositif selon l'une quelconque des revendications 1 à 8, caractérisé en ce que le récipient (1) faisant office de tampon est installé dans la tuyère (10).

12. Dispositif selon l'une quelconque des revendications précédentes, caractérisé en ce que le détecteur de pression (43) est installé entre le récipient (1) faisant office de tampon et l'orifice de la tuyère (10).

13. Dispositif selon les revendications 6 et 12, caractérisé en ce que le détecteur de pression (43) est installé contre l'extrémité du conduit (45) disposé à proximité de la tuyère (10).

14. Dispositif selon l'une quelconque des revendications précédentes, caractérisé en ce que la tuyère (10) est installée immédiatement contre le récipient (1) faisant office de tampon.

15. Dispositif selon l'une quelconque des revendications précédentes, caractérisé en ce que, dans la tuyère (10), on prévoit une soupape (6, 54) pour fermer la tuyère (10).

16. Dispositif selon la revendication 15, caractérisé en ce que la soupape (54) est une soupape à siège, en particulier une soupape à pointeau.

17. Dispositif selon la revendication 15, caractérisé en ce que la soupape (6) est une soupape à vanne rotative.

18. Dispositif selon la revendication 15, caractérisé en ce que la soupape (6) est une soupape de réglage.

19. Dispositif selon l'une quelconque des revendications précédentes, caractérisé en ce que la tuyère (10) est montée sur un dispositif de fixation (46) en rotation par rapport au récipient (1) faisant office de tampon autour d'un axe (48) traversant son orifice; en revanche, le récipient (1) faisant office de tampon est relié à demeure au dispositif de fixation (46).

20. Dispositif selon la revendication 19, caractérisé en ce que l'axe (48) traverse l'orifice de la tuyère dans le sens de l'évacuation.

21. Dispositif selon l'une quelconque des revendications précédentes, caractérisé en ce que le générateur de pression (2 à 5) est une unité à piston/cylindre entraînée par un moyen de pression.

22. Dispositif selon l'une quelconque des revendications précédentes, caractérisé en ce qu'un piston (2) est guidé en coulissement dans le récipient (1) faisant office de tampon, sur lequel agit le générateur de pression (2 à 5),

en ce que le conduit d'alimentation (11) débouche dans le récipient (1) faisant office de tampon à un endroit disposé devant le piston (2) lorsque celui-ci se trouve dans sa position la plus avancée,

et en ce qu'on prévoit des dispositifs de commutation (15, 16) répondant à une position avant et à une position arrière du piston (2), qui répondent à la position avant du piston (2) et ainsi mettent en circuit la pompe (12), et qui répondent à la position arrière du piston (2) et ainsi mettent hors circuit la pompe (12),

la force s'exerçant à l'intervention du générateur de pression (3 à 5) sur le piston (2) étant adaptée à la pression de refoulement de la pompe (12) de telle sorte que la pression régnant dans le conduit d'alimentation (11) à son orifice d'entrée (11a) dans le récipient (1) faisant office de tampon est supérieure à la pression exercée par le piston (2) sur la substance.

23. Dispositif selon les revendications 21 et 22, caractérisé en ce que le piston (4) du générateur de pression (5) peut être sollicité des deux côtés par un moyen de pression.

24. Dispositif selon la revendication 23, caractérisé en ce que le piston (4) du générateur de pression (5) est sollicité en permanence à l'aide d'un moyen de pression se trouvant sous pression constante, sur son côté qui se détourne du piston (2) agissant sur la substance; en revanche, il est sollicité sur son autre côté au cours de la mise en service de la pompe (12) par un moyen de pression qui se trouve sous une contre-pression inférieure à cette pression constante.

25. Dispositif selon la revendication 24, caractérisé en ce que cette contre-pression inférieure constitue n'importe quelle pression constante présélectionnée.

26. Dispositif selon la revendication 24 ou 25, caractérisé en ce qu'on prévoit au moins un élément retardateur (31) qui retarde quelque peu l'établissement de la contre-pression par rapport à la mise en circuit de la pompe (12) et la suppression de la contre-pression par rapport à la mise hors circuit de la pompe (12).

27. Dispositif selon les revendications 19 à 26, caractérisé en ce qu'on prévoit un canal annulaire (62) dans le dispositif de fixation (46), qui entoure la tuyère (10) ou un arbre supportant cette tuyère (10), ouvert en direction de la tuyère (10) ou de son arbre (47), dans lequel débouche le conduit (45) provenant du récipient (1) faisant office de tampon et qui est à l'orifice de la tuyère (10) à l'intervention d'un canal (64) s'étendant dans la tuyère (10) ou dans son arbre (47).

28. Dispositif selon les revendications 13 et 27, caractérisé en ce que le détecteur de pression (43) est installé dans le dispositif de fixation (46) à proximité immédiate du canal annulaire (62).

29. Dispositif selon la revendication 16 et l'une quelconque des revendications 25 à 28, caractérisé en ce que le pointeau (54) est entraîné par un organe d'entraînement relié de manière immobile en rotation à la tuyère (10), en particulier à l'intervention d'un cylindre de pression (7).

30. Dispositif selon la revendication 29, caractérisé en ce que l'élévation du pointeau (54) peut être réglée par un organe de réglage, en particulier, par une butée réglable (59).

31. Dispositif selon l'une quelconque des revendications 1 à 21, caractérisé en ce que le récipient (1) faisant office de tampon constitue une section (11d) extensible du conduit d'alimentation (11) que le générateur de pression (40, 84) sollicite de l'extérieur avec de la pression.

32. Dispositif selon les revendications 1 à 21 et 31, caractérisé en ce que le récipient (1) faisant office de tampon contient au moins un soufflet (11e) dont l'espace interne ou l'espace externe est relié à une source de moyen de pression (40) qui peut être commandée.

33. Dispositif selon les revendications 1 et 18, caractérisé en ce que la pression prédéfinie à titre de valeur de consigne est constante.

34. Dispositif selon l'une quelconque des revendications précédentes, caractérisé en ce qu'on installe près du conduit d'alimentation (45, 64) ou dans ce dernier, un détecteur de température à un endroit (69, 81) situé en aval du générateur de pression (2 à 5).

35. Dispositif selon la revendication 34, caractérisé en ce que, pour des substances à traitement à chaud, on prévoit un ou plusieurs éléments de chauffage pour le réchauffement du récipient (1) faisant office de tampon et/ou de la tuyère (10) et en ce qu'on prévoit le détecteur de température pour la commande des éléments de chauffage, qui fait partie d'un circuit de réglage au même titre que les éléments de chauffage.

36. Dispositif selon la revendication 35, caractérisé en ce que, pour la tuyère (10) ou pour son dispositif de fixation (46) et pour le récipient (1) faisant office de tampon, on prévoit des circuits de réchauffement séparés, munis chacun d'au moins un élément de chauffage et d'un détecteur de température actionnant ce dernier.

37. Dispositif selon la revendication 34, caractérisé en ce que, pour des substances à traitement à froid, le détecteur de température (69) fait partie d'un circuit de réglage au même titre que le générateur de pression (2 à 5), dont le régulateur (44) règle ultérieurement la pression en se référant à des valeurs d'expérience mémorisées, en fonction de la température mesurée.

38. Dispositif selon l'une quelconque des revendications précédentes, caractérisé en ce que le récipient (1) faisant office de tampon constitue une unité à piston/cylindre munie d'un piston plongeur ou d'un piston pousseur (2).

39. Dispositif selon la revendication 11 et selon l'une quelconque des revendications 34 à 37, caractérisé en ce que le détecteur de température (82) et le détecteur de pression (43) sont installés dans le récipient (1) faisant office de tampon.

40. Dispositif pour doser des substances très visqueuses, pâteuses, compressibles, en particulier pour l'application de substances d'étanchéification et d'adhésifs sur des éléments de carrosserie dans la fabrication de carrosseries,

muni d'un petit récipient d'alimentation (1) destiné à contenir la substance, dont on peut modifier la contenance à l'intervention d'un générateur de pression (2 à 5) disposé immédiatement contre ou dans le récipient d'alimentation (1),

et d'une tuyère (10) pour l'évacuation de la substance,

caractérisé en ce que la tuyère (10) est installée immédiatement contre le récipient d'alimentation (1) ou est reliée à ce dernier tout au plus à l'intervention d'un petit conduit d'alimentation (45) et constitue, conjointement avec le récipient d'alimentation (1) une unité de montage en tout cas mutuellement rotative, mais pour le reste fixe ou rigide,

en combinaison avec un détecteur de pression (43) qui enregistre la pression régnant à un endroit situé en aval du générateur de pression (2 à 5), le détecteur de pression faisant partie, au même titre que le générateur de pression (2 à 5), d'un circuit de réglage (43, 44, 40, 25, 2 à 5) qui règle cette pression à une valeur de consigne prédéfinie.

# FIG.1

Sollwertvorgabe

# FIG.2

## FIG.3

# FIG.4

# FIG.5

EP 0 412 978 B1

Fig. 6

Fig. 7

Fig.8